# EUROPEAN PATENT APPLICATION

(11) **EP 1 921 626 A1**
(43) Date of publication of application: **14.05.2008**
(21) Application number: 06796992.3
(22) Date of filing: 29.08.2006
(51) Int. Cl.: G11B 27/00, G11B 20/10, G11B 20/12, H04N 5/91

(54) **RECORDING DEVICE, RECORDING METHOD, REPRODUCING DEVICE, REPRODUCING METHOD, PROGRAM AND RECORDING MEDIUM**

(30) Priority: 29.08.2005 JP 2005247181
(71) Applicant: Sony Corporation, Tokyo (JP)
(72) Inventor: KAWATE, Fumitaka, Tokyo 141-0001 (JP); HIRABAYASHI, Mitsuhiro, Tokyo 141-0001 (JP); JINNO, Hiroshi, Tokyo 141-0001 (JP); KASHIWAGI, Shigeru, Tokyo 141-0001 (JP); OBATA, Hideo, Tokyo 141-0001 (JP); OHNO, Masayoshi, Tokyo 141-0001 (JP)
(74) Representative: Keston, Susan Elizabeth
(86) International application number: PCT/JP2006/317015
(87) International publication number: WO 2007/026719

(57) **Abstract**

Content files and an index file for managing the content files are recorded in a recording medium. The index file includes, for example, a text file FTX, a thumbnail picture file FTH, and a property file FP. The files each have continuous fixed-length slots. The fixed-length slots are each managed by a slot number (index information) indicative of the order of arrangement thereof. Each file has a predetermined number of management information areas including one or a plurality of continuous fixed-length slots. The management information areas are identified by the index information of the first fixed-length slot. A predetermined entry has a slot number for identifying another entry. The data on the other entry can be acquired by detecting the location of the other entry on the index file.

## Description

### Technical Field

The present invention relates to a recording apparatus, a method for recording, a reproducing apparatus, a method for reproduction, a program, and a recording medium for recording a content file and an index file for managing the content file in a recording medium or for reproducing a content file from the recording medium.

Specifically, the invention relates to a recording apparatus and so on in which the index file includes continuous fixed-length slots; the fixed-length slots are managed by index information indicative of the order of the arrangement of the fixed-length slots; the index file includes a predetermined number of management information areas having one or a plurality of fixed-length slots; and The management information areas are identified by the index information of the first fixed-length slot, so that the time necessary for start-up at power-on or at the loading of a recording medium can be reduced.

### Background Art

Methods for easily finding a desired file from a large number of files recorded in a mass-storage recording medium by using an index file are proposed in Patent Documents 1, 2, 3, and so on.

Index files for managing content files are constituted by or generated from a group of attribute information of the content files. The attribute information of the content file includes thumbnail picture data, title text data, the date of photo shooting, codec information, face information (face size, face position, and digitized face score). The attribute information is not limited to those. The attribute information of the content files constitutes respective content-file managing information.

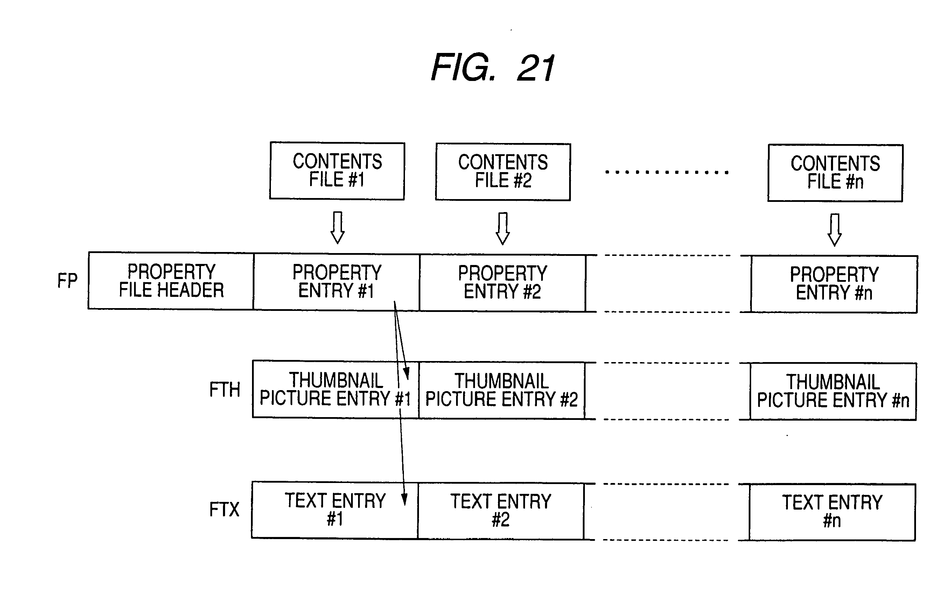

As shown in Fig. 21, the index file includes a text file (or a meta-data file) FTX, a thumbnail picture file FTH, and a property file FP. The attribute information of the content file is divided into the text file FTX, the thumbnail picture file FTH, and the property file FP.

However, some types of content file have no attribute information for the text file FTX and the thumbnail picture file FTH, so that they sometimes have no entry. Fig. 21 shows a case in which each content file has attribute information for the text file FTX, the thumbnail picture file FTH, and the property file FP.

The text file FTX manages text information (meta-data for a meta-data file). The thumbnail picture file FTH manages thumbnail picture data. The property file FP manages attribute information (basic attribute information) except the attribute information for the text file FTX or the thumbnail picture file FTH, and also manages information on the connection between the slots of another file.

The property file FP has a header indicative of its attribute at its head. In contrast, the text file FTX and the thumbnail picture file FTH have no header at their heads. However, the text file FTX and the thumbnail picture file FTH sometimes have headers indicative of their attribute at their heads, as with the property file FP. Following the header, the property file FP has continuous entries including the attribute information of the content files (a property entry #1, a property entry #2, ---, a thumbnail entry #1, a thumbnail entry #2, ----, a text entry #1, a text entry #2, -----).

The entries of the text file FTX are assigned data indicative of character strings of disc titles or the titles of the content files. The entries of the thumbnail picture file FTH are assigned thumbnail picture data indicative of disc titles or the content of the content files.

The entries of the text file FTX and the thumbnail picture file FTH each include fixed-length slots. The number of slots of each entry is one or more according to the amount of attribute information assigned to the entry. Since the type of attribute information depends on the type of content file, no entry is sometimes provided, as described above.

The entries of the property file FP are assigned data indicative of disc titles and the attributes of the content files, respectively. The property file FP includes fixed-length slots as with the text file FTX and the thumbnail picture file FTH. The property file FP always has entries corresponding to the content files even if the type of the content files varies.

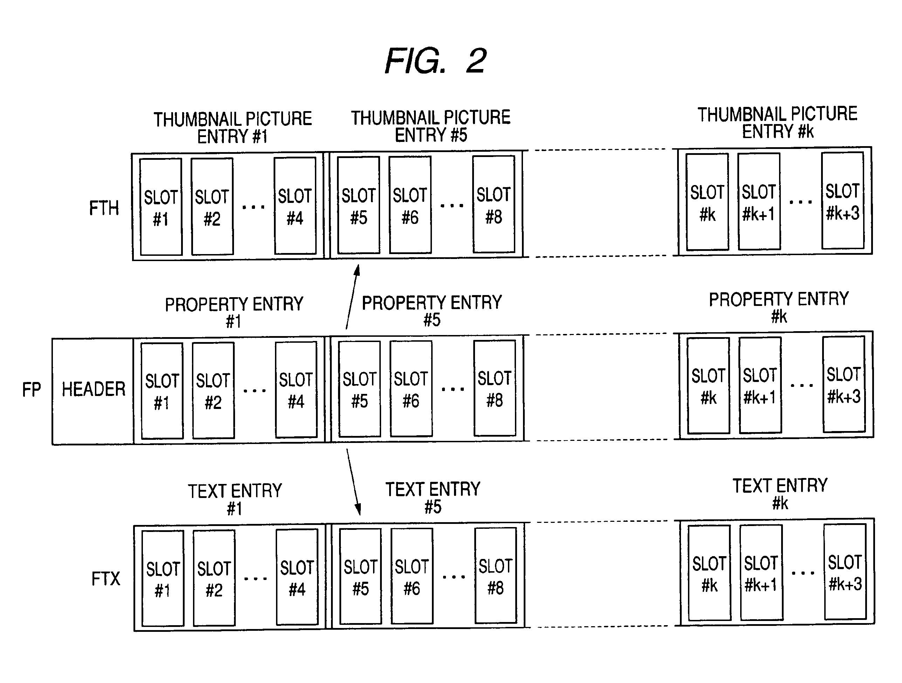

For the entries of the property file FP, management information (related information indicated by the arrows in Fig. 2) that specifies the corresponding entries of the text file FTX and the thumbnail picture file FTH is set as management information indicative of the relation with other entries. For the entries of the property file FP each including a plurality of slots, management information that specifies the slots following the previous slots is set. For the entries of the property file FP, information that specifies the corresponding content file is set.

The index file IF is configured as above. Thus, for example, the titles of the content files recorded on the recording medium 2 can be displayed in list form by reproducing the data row recorded on the text file FTX. Moreover, for example, the thumbnail pictures of the content files recorded on the recording medium 2 can be displayed in list form by reproducing the data row recorded on the thumbnail picture file FTX.

The index file IF can be defined not only for the existent content files but also for virtual folders by the text file FTX, the thumbnail picture file FTH, and the property file FP. To the entries of the property file FP, information that defines the hierarchical structure of the content files and the virtual folders is set.

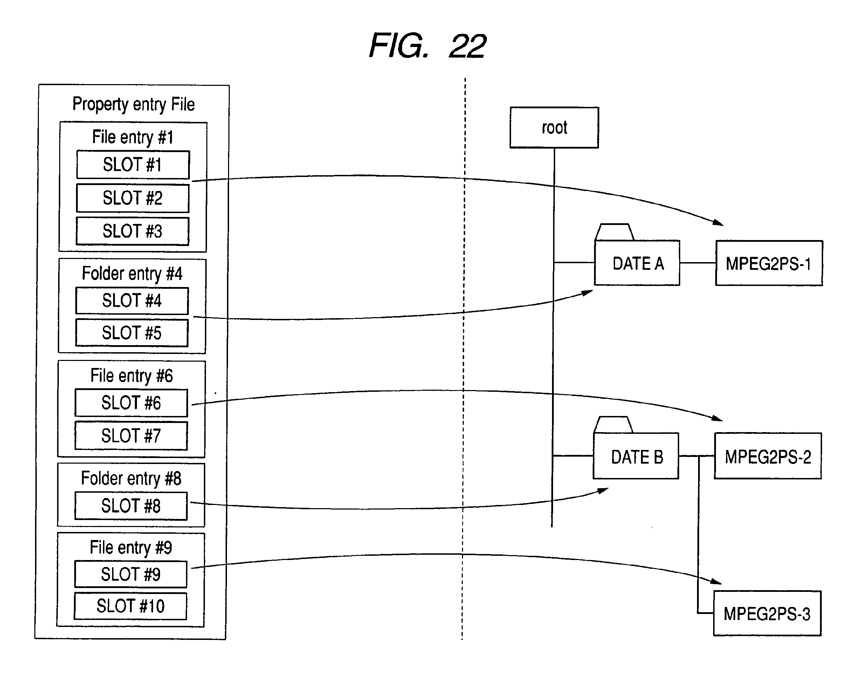

Fig. 22 shows an example of the correspondence between the property file and the content files and virtual folders. In this example, a virtual folder with the date of picture shooting of "Date A" and a virtual folder with the date of picture shooting of "Date B" are present on the same level; a content file of "MPEG2PS-1" is present on a level lower than the virtual folder of "Date A"; and content files of "MPEG2PS-2" and "MPEG2PS-3" are present on a level lower than the virtual folder of "Date B".

In correspondence with such a hierarchical structure, the property file includes a file entry #1, a folder entry #4, a file entry #6, a folder entry #8, and a folder entry #9, as shown in Fig. 22. The number of each entry is the number of the first slot thereof. In the example illustrated, the number of each entry is set at the smallest number of the slots of the entry.

The file entries #1, #6, and #9 manage the content files of "MPEG2PS-1", "MPEG2PS-2", and "MPEG2PS-3", respectively, while the folder entries #4 and #8 manage the virtual folders of "Date A" and "Date B", respectively.

As has been described, the entries each including one or a plurality of slots are arranged in any order on the index file by repetition of recording and deleting. Accordingly, conventional index files have been configured such that entry numbers are set to every entries, with which the entries have been managed.

With recording and reproducing apparatuses for the index file, first, all the entries recorded in the index file are read into a memory; and the correspondence between the entry numbers and the locations is grasped; and then information on a desired entry has been obtained from the index file on the basis of the correspondence.

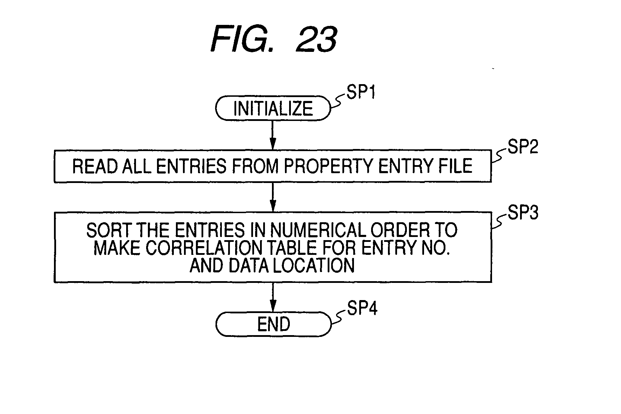

The flowchart of Fig. 23 shows the initializing procedure for tabulating the correspondence between entry numbers and their locations.

The recording and reproducing apparatus starts an initializing process by turning on power or loading a recording medium, and proceeds from step SP1 to step SP2. In step SP2, the recording and reproducing apparatus reads all the entries from the property file of the index file recorded in the recording medium, and records the entries in a memory.

In step SP3, the recording and reproducing apparatus sorts the entries read into the memory in numerical order to tabulate the correspondence between the entry numbers and their locations. In step SP4, the recording and reproducing apparatus terminates the initializing process.

The recording and reproducing apparatus tabulates the correspondence between the entry numbers and their locations by the initializing process, as described above, then, when the user gives an instruction to display management information on a specified entry, for example, to display the title of the content file or a thumbnail picture, the reporting and reproducing apparatus searches the table for the location of the specified entry, acquires the text data on the title or the data on the thumbnail picture from the specified entry of the index file on the basis of the search result, and provides it to the user.
Patent Document 1: JP-A-2004-227630
Patent Document 2: JP-A-2004-227633
Patent Document 3: JP-A-2005-115815

### Disclosure of the Invention

### Problems to be Solved by the Invention

The apparatus that reads all the entries registered in the index file into the memory, and grasping the correspondence between the entry numbers and their locations to tabulating them is useful enough in the case where the number of content files managed by the index file is as small as several thousands. However, if the number of the content files managed by the index file is as many as several tens of thousands, it takes a lot of initializing time to grasp the correspondence between the entry numbers and their locations and tabulate it, resulting in nonnegligible time for start-up.

Moreover, since the amount of the table of the correspondence between the entry numbers and the locations increases as the number of content files increases, necessary memory capacity also increases. Moreover, the tabulation of the correspondence between the entry numbers and their locations needs an operation to search the table for the information such as the content file of a desired entry number with its entry number to thereby find the location. This increases searching time with an increasing number of entries.

Accordingly, it is an object of the present invention to reduce the time necessary for starting up an apparatus that records a content file and an index file for managing the content file on a recording medium or that reproduces a content file from the recording medium at power-on or at the loading of the recording medium.

### Means for Solving the Problems

A concept of the invention is a recording apparatus for recording one or more content files and an index file for managing the content files on a recording medium, the recording apparatus comprising:
a content-file changing section for changing the content files recorded on the recording medium; and
an index-file updating section for updating the index file recorded on the recording medium; wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the index-file updating section registers the index information indicative of the other management information areas to the predetermined management information areas.

A concept of the invention is a reproducing apparatus for reproducing a specified content file from a recording medium that records one or more content files and an index file for managing the content files, the reproducing apparatus comprising:
an index-file reproducing section for reproducing the index file from the recording medium; and
a content-file reproducing section for reproducing the specified content file from the recording medium on the basis of the index file reproduced by the index-file reproducing section, wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the predetermined management information areas of the index file store the index information for identifying the other management information areas; and
the index-file reproducing section detects the location of the other management information area on the index file from the index information registered in the predetermined management information area and the size information on the fixed-length slots, and reproduces the data on the detected location from the index file recorded on the recording medium.

According to the invention, at least a content file and an index file for managing the content file are recorded on the recording medium. The content file recorded on the recording medium is changed by the content-file changing section. The change of the content file recorded on the recording medium includes recording a new specified content file on the recording medium and deleting a specified content file from the recording medium.

When the content file recorded on the recording medium is changed by the content-file changing section, the index file recorded on the recording medium is updated by the index-file updating section. Thus the index file and the content file recorded on the recording medium are agreed with each other.

The index file recorded on the recording medium is reproduced by the index-file reproducing section. The index-file reproducing section reproduces a specified content file from the recording medium according to the reproduced index file.

The index file includes continuous fixed-length slots. The fixed-length slots are managed by index information indicative of the order of the arrangement of the fixed-length slots. The index file has a predetermined number of management information areas having one or a plurality of the fixed-length slots. The management information areas are identified by the index information of the first fixed-length slot. In this case, the index information indicative of the management information areas indicates the respective locations of the management information areas in the index file.

Index information indicative of the other management information areas is registered to predetermined management information areas of the index file. The registered index information indicates the locations of the other management information areas in the index file. The index-file reproducing section detects the location of the other management information area on the index file from the index information registered in the predetermined management information area and the size information on the fixed-length slots, and reproduces the data on the detected location from the index file recorded on the recording medium.

The index information indicative of the management information areas indicates the respective locations of the management information areas on the index file. This eliminates the need for creating a table indicative of the correspondence between the management information areas and the locations at power-on or at the loading of a recording medium, thus reducing the time necessary for start-up.

For example, the index file includes a plurality of files to which different attribute information is assigned; the predetermined management information areas are provided to one file constituting a plurality of files; and the index information registered to a predetermined management information area is index information that identifies the management information area of the other file corresponding to the predetermined management information area.

When the index file includes a property file, a text file, and a thumbnail picture file, index information for identifying the corresponding management information areas of the text file and the thumbnail picture file is registered in a predetermined management information area (entry) for managing a predetermined content file of the property file.

In this case, the index information registered in the predetermined management information area that manages the specified content file of the property file indicates the location of the management information areas of the text file and the thumbnail picture file corresponding to the predetermined management information area. Therefore, the management information area corresponding to the predetermined management information area can be searched for at high speed from the text file and the thumbnail picture file, allowing high-speed acquisition of text data and thumbnail picture data corresponding to the predetermined content file.

For example, the predetermined management information areas are for managing a specific type of folder or file; and the index information registered to the predetermined management information areas identifies the management information areas to be searched before or after the predetermined management information areas. This allows the management information area on a specific type of folder or file to be searched for in a predetermined order, thus allowing a specific type of content file to be reproduced in a predetermined order.

For example, the predetermined management information areas are for managing predetermined nodes that constitute a tree structure including folders and files; and the index information registered to the predetermined management information areas is for identifying the management information areas for managing nodes at a level higher or lower than the node.

In this case, the index information registered in the predetermined management information area indicates the location of the management information area that manages the node at a level higher or lower than the specified node. This allows high-speed searching of the management information area that manages the node at a level higher or lower than the specified node to acquire managing information, allowing high-speed processing including displaying a tree structure and deleting a specified node.

For example, the predetermined management information areas are for managing predetermined folders or files; and the index information registered to the predetermined management information areas is index information identifying the management information areas for managing folders or files related to the predetermined folders or files. In this case, the index information registered in the predetermined management information area indicates the location of the management information area that manages the folder or file related to the specified folder or file. This allows high-speed searching of the management information area that manages the folder or file related to the specified folder or file to acquire management information, thus allowing high-speed processing including acquisition of management information on the related file or folder and deletion of the related file or folder.

For example, the predetermined management information areas are for managing folders including a predetermined file; and the index information registered to the predetermined management information areas is for identifying the management information areas for managing the predetermined file. In this case, the index information registered in the predetermined management information area indicates the location of the management information area for managing the specified file. This allows high-speed searching for the management information area for managing the specified file to acquire managing information, thus allowing high-speed processing including the acquisition of managing information on the specified file and the deletion of the specified file.

### Advantages of the Invention

According to the invention, the index file includes continuous fixed-length slots; the fixed-length slots are managed by index information indicative of the order of the arrangement of the fixed-length slots; the index file has a predetermined number of management information areas having one or a plurality of continuous fixed-length slots; the management information areas are identified by the index information of the first fixed-length slot. This eliminates the need for creating a table indicative of the correspondence between the management information areas and the locations at power-on or at the loading of a recording medium, thus reducing the time necessary for start-up.

According to the invention, there is no need to create a table of the correspondence between entry numbers and their locations, thus saving memory capacity. Furthermore, according to the invention, the location can be detected without the table of the correspondence between entry numbers and their locations. This allows high-speed acquisition of information such as a desired content file without taking a lot of searching time.

### Brief Description of the Drawings

Fig. 1 block diagram showing the structure of a recording and reproducing apparatus.
Fig. 2 is a diagram showing the structure of an index file.
Fig. 3 is a diagram showing the structure of a property file.
Fig. 4 is a diagram showing an example of a property file including a plurality of property files, thumbnail picture files, and text files.
Fig. 5 is a diagram showing the structure of the slots of the property file.
Fig. 6 is a diagram showing the structure of the data section of each slot of the property file.
Fig. 7 is a diagram showing the relationship between slots and entries.
Fig. 8 is a diagram showing the details of the header of the property file.
Fig. 9 is a diagram of the entry data of each entry.
Fig. 10 is a diagram showing the two-way link (the link of the original folder) set in the entries according to the order of search.
Fig. 11 is a diagram showing the two-way link (the link of the file entries) set in the entries according to the order of search.
Fig. 12 is a diagram showing the order of the arrangement of the original folder and the file entries.
Fig. 13 is an explanatory diagram of the index information indicative of the higher-order entries according to the definition of the tree structure defined by the property entry.
Fig. 14 is a diagram showing the index information indicative of lower-order entries.
Fig. 15 is a diagram showing the relationship among entries in a tree structure.
Fig. 16 is a diagram showing an example in which each entry has information on management.
Fig. 17 is a diagram showing reference information set for the entries of a referring file of the index information indicative of reference relationship.
Fig. 18 is a diagram showing information to be referred set for the entries of a file to be referred of the index information indicative of reference relationship.
Fig. 19 is a flowchart of an initializing process.
Fig. 20 is a process of updating the index file.
Fig. 21 is an explanatory diagram of the text file, thumbnail picture file, and property file that constitute the index file.
Fig. 22 is a diagram of an example of the correspondence among the property file, the content files, and the virtual folders.
Fig. 23 is a flowchart of a known initialization procedure.

### Description of Reference Numerals and Signs

1: recording and reproducing apparatus; 2: imaging device; 3: system control microcomputer; 4: video encoder; 5: audio encoder; 6: graphic controller: 7: meta-data decoder; 8: monitor; 9: meta-data encoder; 10: file generator; 12: memory controller; 13: memory; 14: recording medium unit; 15: file decoder; 17: video decoder; 18: audio decoder

### Best Mode for Carrying Out the Invention

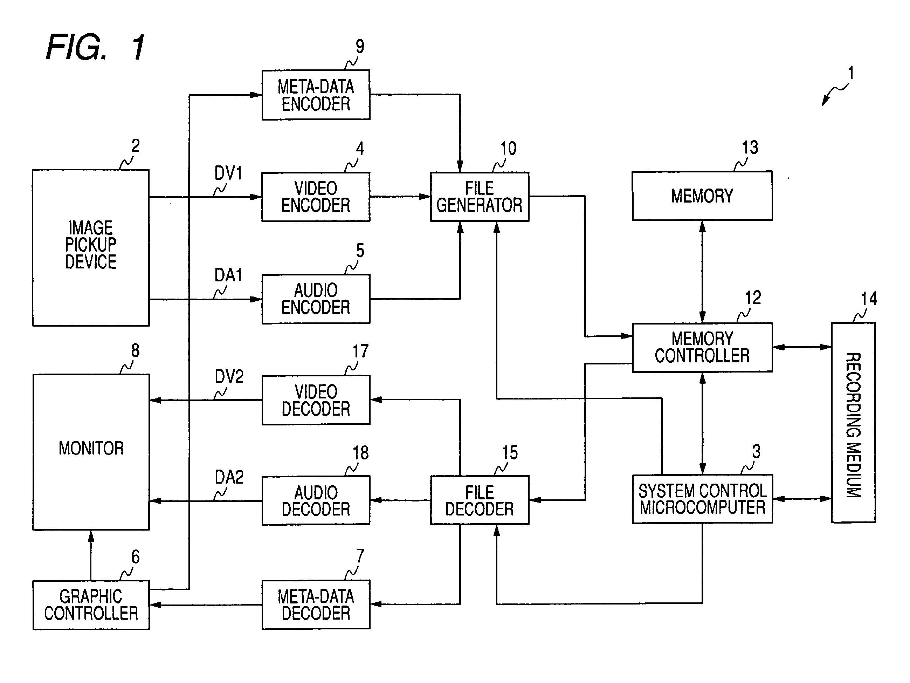

An embodiment of the invention will be described. Fig. 1 shows the structure of a recording and reproducing apparatus 1 as an embodiment.

The recording and reproducing apparatus 1 includes an imaging device 2, a system control microcomputer (hereinafter, referred to as a system control microcomputer) 3, a video encoder 4, an audio encoder 5, a graphic controller 6, a meta-data decoder 7, a monitor 8, a meta-data encoder 9, a file generator 10, a memory controller 12, a memory 13, a file decoder 15, a video decoder 17, and an audio decoder 18.

The imaging device 2 includes an imaging means and an audio acquisition means. The imaging device 2 outputs video data DV1 and audio data DA1 of a subject from the imaging means and the audio acquisition means, respectively under the control of the system control microcomputer 3.

The video encoder 4 encodes the video data DV1 output from the imaging device 2 according to the Moving Picture Experts Group (MPEG) format to output the elementary stream of the video data. The video encoder 4 generates thumbnail picture data for use in generating an index file according to the video data DV1 output from the imaging device 2, and outputs the picture data to the system control microcomputer 3. The audio encoder 5 encodes the audio data output from the imaging device 2 according to the MPEG format to output the elementary stream of the audio data.

Under the control of the system control microcomputer 3, the graphic controller 6 generates video data indicative of meta-data information output from the meta-data decoder 7, and outputs the video data to the monitor 8. The graphic controller 6 also generates video data on the thumbnail picture data and menu data output from the system control microcomputer 3, and outputs the video data to the monitor 8. The graphic controller 6 receives input, such as a title, from a touch panel on the screen of the monitor 8, displays it on the monitor 8, and outputs the meta-data such as a title to the meta-data encoder 9.

The meta-data encoder 9 encodes the meta-data output from the graphic controller 6 in a specified format, and outputs it. The file generator 10 multiplexes the elementary stream of the video data output from the video encoder 4, the elementary stream of the audio data output from the audio encoder 5, and the data output from the meta-data encoder 9, and outputs the data on a content file in a specified file format under the control of the system control microcomputer 3.

The memory controller 12 switches its operation at recording and reproduction by the control of the system control microcomputer 3. For recording, the memory controller 12 sequentially records the data row of the content file output from the file generator 10 and the data row of the index file output from the system control microcomputer 3 on the memory 13 and temporarily stores them, and outputs the stored data according to the process of a recording medium unit 14. For reproduction, the memory controller 12 temporarily stores the data output from the recording medium unit 14, and outputs it to the file decoder 15 and the system control microcomputer 3.

The recording medium unit 14 switches its operation at recording and reproduction under the control of the system control microcomputer 3. For recording, the recording medium unit 14 records the data output from the memory controller 12 on a recording medium; for reproduction, the recording medium unit 14 reproduces the data recorded on the recording medium, and outputs it to the memory controller 12. This embodiment uses an optical disc as the recording medium.

The file decoder 15 inputs the data of the content file output from the memory controller 12, and divides the data into the elementary streams of video data and audio data and meta-data, and outputs them. The video decoder 17 extends the elementary stream of the video data, and outputs it to the monitor 8. The audio decoder 18 extends the elementary stream of the audio data output from the file decoder 15, and outputs it to the monitor 8.

The monitor 8 includes an image display means and an audio output means. The monitor 8 displays the video data output from the video decoder 17 and the image of the video data output from the graphic controller 6, and outputs a voice of the audio data output from the audio decoder 18.

The system control microcomputer 3 is for controlling the entire operation of the recording and reproducing apparatus 1. The system control microcomputer 3 controls the entire operation by executing a predetermined processing program recorded in a memory (not shown) in response to user operation sensed by the graphic controller 6 or the like. In this embodiment, the processing program for the system control microcomputer 3 is installed in the recording and reproducing apparatus 1 in advance. Alternatively, in place of the pre-installation, this processing program may either be downloaded via a network such as the Internet or recorded in a recording medium such as an optical disc, a magnetic disc, or a memory card.

The system control microcomputer 3 controls the recording medium unit 14 at power-on or at the loading of an optical disc or a recording medium by the execution of the processing program to reproduce management information for the file management file from the optical disc. The system control microcomputer 3 obtains the reproduced management information from the memory controller 12, and stores it in its built-in memory.

The system control microcomputer 3 finds the addresses of the files stored on the optical disc and free space by storing the management information in the built-in memory. The system control microcomputer 3 controls the recording medium unit 14 according to the managing information search result to reproduce the index file stored on the optical disc, and presents the various content files stored on the optical disc to receive user's operation.

The index file reproduced from the optical disc is stored in the built-in memory of the system control microcomputer 3 or in the memory 13. In this embodiment, the index file is stored in the built-in memory.

When the user gives an instruction to record an imaging result, the system control microcomputer 3 detects free space according to the management information stored in the built-in memory, and seeks the optical pickup of the recording medium unit 14 according to the detection result to thereby record the content file of the picked up image in the free space. When the user gives an instruction to delete the content file stored on the optical disc, the system control microcomputer 3 controls the recording medium unit 14 to delete the content file to be deleted from the optical disc.

The system control microcomputer 3 updates the management information stored in the built-in memory according to the change (recording or deletion) of the content file recorded on the optical disc or the edition of the tree structure of the index file, and updates the management information recorded on the optical disc according to the updated management information at the unloading of the optical disc. The system control microcomputer 3 executes the update of the management information by outputting the updated management information stored in the built-in memory to the recording medium unit 14 via the memory controller 18.

When recording the content file on the optical disc, the system control microcomputer 3 outputs various information necessary for generating the content file to the file generator 10. The system control microcomputer 3 acquires information necessary for generating the index file from the video encoder 4, the audio encoder 5, the meta-data encoder 9, or the like. The system control microcomputer 3 updates the data of the index file stored in the built-in memory, according to the recording of the content file in the optical disc on the basis of the acquired information, and updates the index file recorded on the optical disc according to the updated data of the index file.

In this case, the system control microcomputer 3 updates the index file stored in the built-in memory by adding the entry corresponding to the content file recorded on the optical disc to the index file.

The system control microcomputer 3 and the recording medium unit 14 constitute a content-file changing section that changes the content file to be recorded on a recording medium, a content-file reproducing section that reproduces a content file from the recording medium, and an index-file reproducing section that reproduces an index file from the recording medium. The system control microcomputer 3 and the recording medium unit 14 also constitute an index-file updating section that updates the index file recorded on the recording medium.

The operation (recording, reproduction, and deletion) of the recording and reproducing apparatus 1 shown in Fig. 1 will be briefly described.

When the user turns on power, the system control microcomputer 3 instructs the recording medium unit 14 to acquire data of the file management system. Then, the recording medium unit 14 acquires data of the file management system from the optical disc (recording medium) according to the instruction. The data of the file management system is supplied to the system control microcomputer 3 via the memory controller 12, and stored in the built-in memory. The system control microcomputer 3 detects free space in the optical disc and information on the recording location of the content file and the index file in the optical disc on the basis of the data of the file management system.

The system control microcomputer 3 instructs the recording medium unit 14 to acquire the index file. The recording medium unit 14 acquires data of the index file from the optical disc (recording medium) according to the instruction. The data of the index file is supplied to the system control microcomputer 3 via the memory controller 12, and stored in the built-in memory.

The operation of recording the content file of the imaging result on a recording medium 2 will be described.

The video data DV 1 and the audio data DA 1 acquired by the imaging device 2 are encoded by the video encoder 4 and the audio encoder 5, respectively, and then supplied to the file generator 10. The meta-data including titles generated by the graphic controller 6 is encoded by the meta-data encoder 9, and then supplied to the file generator 10.

The file generator 10 multiplexes the elementary stream of the video data output from the video encoder 4, the elementary stream of the audio data output from the audio encoder 5, and the data output from the meta-data encoder 9 to generate a content file.

The data row of the content file output from the file generator 10 is sequentially stored in the memory 13, and the stored data is output according to the process of the recording medium unit 14. The data output from the memory controller 12 is supplied to the recording medium unit 14, and is recorded in a free space of the optical disc.

In parallel with the content-file recording process, the video encoder 4 generates thumbnail picture data on the basis of the image data output from the imaging device 2. The system control microcomputer 3 acquires information such as text data on titles necessary for generating an index file or thumbnail picture data from the video encoder 4, the audio encoder 5, or the meta-data encoder 9. The system control microcomputer 3 updates the index file stored in the built-in memory on the basis of the acquired information and in correspondence with the recording of the content file into the optical disc.

After the content file has been recorded on the optical disc, as described above, the recording medium unit 14 updates the index file recorded on the optical disc using the data of the index file recorded in the built-in memory of the system control microcomputer 3. Then, the recording medium unit 14 updates the data of the file management system recorded on the optical disc in correspondence with the update of the index file.

An operation of reproducing a specified content file with reference to the list of the content files recorded in the recording medium 2 will be described.

When the user gives an instruction to display the list of content files, the system control microcomputer 3 sequentially acquires thumbnail picture data corresponding to the content files from the data of the index file recorded in the built-in memory, and outputs thumbnail picture data in list form. The graphic controller 6 generates video data on the thumbnail picture data, and outputs it to the monitor 8. The image display means of the monitor 8 displays the thumbnail images of the content files in list form.

When the user selects a specified thumbnail picture and gives an instruction to reproduce it, with thumbnail pictures are displayed in list form on the monitor 8, the system control microcomputer 3 instructs the recording medium unit 14 to reproduce a content file corresponding to the specified thumbnail picture according to the index file stored in the built-in memory. The recording medium unit 14 reproduces a content file corresponding to the thumbnail picture from the optical disc.

The data of the reproduced content file is supplied to the file decoder 15 via the memory controller 12. The file decoder 15 divides the data of the content file into elementary streams of video data and audio data and meta-data, and outputs them. The video and audio elementary streams are decoded by the video decoder 17 and the audio decoder 18, respectively. Video data DV2 and audio data DA2 acquired through the decoders 17, and 18, respectively, are supplied to the monitor 8. The monitor 8 displays an image corresponding to the reproduced content file.

The meta-data output from the file decoder 15 is decoded by the meta-data decoder 7, and is then supplied to the graphic controller 6. The graphic controller 6 supplies video data indicative of meta-data information to the monitor 8. The monitor 8 displays information, such as a title, which is superimposed on, for example, an image corresponding to the content file.

An operation of deleting a specified content file with reference to the list of the content files recorded on the recording medium 2 will be described.

When the user selects a specified thumbnail picture and gives an instruction to delete it, with thumbnail pictures are displayed in list form on the monitor 8, as described above, the system control microcomputer 3 instructs the recording medium unit 14 to delete a content file corresponding to the specified thumbnail picture according to the index file stored in the built-in memory. The recording medium unit 14 deletes the content file corresponding to the thumbnail picture from the optical disc.

In parallel with the content-file deleting process, the system control microcomputer 3 updates the data of the index file stored in the built-in memory. After the content file is deleted from the optical disc, as described above, the recording medium unit 14 updates the index file recorded on the optical disc using the index file data recorded on the built-in memory of the system control microcomputer 3. Then, the recording medium unit 14 updates the data of the file management system recorded on the optical disc in correspondence with the update of the index file.

An operation of editing the index file recorded on the recording medium 2 will be described.

In this case, the system control microcomputer 3 generates image data for displaying the list of the entries of the property file on the basis of the index file stored in the built-in memory. The listed image data is supplied to the monitor 8 via the graphic controller 6. The monitor 8 thus displays the list of the entries of the property file, for example, in tree structure.

With this state, the system control microcomputer 3 updates the index file stored in the built-in memory according to the index-file editing operation by the user. Examples of the index-file editing operation include creating a new folder entry corresponding to a virtual folder, locating a file entry corresponding to a content file added to a lower level of a specified virtual folder, setting the order of searching for a folder or file by specific type, setting the relation among folders or files, adding a specified file to a specific folder, and deleting a specified folder entry or file entry.

Upon completion of the index-file editing operation, the recording medium unit 14 updates the index file recorded on the optical disc using the updated index file data in the built-in memory of the system control microcomputer 3. After that, the recording medium unit 14 updates the data of the file management system recorded on the optical disc in correspondence with the update of the index file.

The details of the index file will next be described.

The index file includes the text file FTX, the thumbnail picture file FTH, and the property file FP, as described above with reference to Fig. 21. In this embodiment, particularly, an index file made up of the property file FP, the thumbnail picture file FTH, and the text file (or a meta-data file) FTX is referred to as an AV-Index file.

The attribute information of the content files is divided into a text file, a thumbnail picture file, and a property file. Each file has continuous entries according to the attribute information of the content files. The entries each include one or a plurality of fixed-length slots. The entries each configure a management information area.

The entries (parity entries) of the property file FP are assigned data indicative of the attribute of the content files, respectively. To the entries of the property file FP, management information that specifies the corresponding entries of the text file FTX and the thumbnail picture file FTH is set. To the entries of the property file FP each including a plurality of slots, management information that specifies a slot following the previous slot is set. To the entries of the property file FP, information that specifies the corresponding content file is set. To the entries of the property file FP, information that defines the hierarchical structure of the content file, an existent folder, and a virtual folders is set.

Each file has continuous fixed-length slots. The fixed-length slots are managed by slot numbers indicative of the order of arrangement thereof. The slot numbers constitute index information indicative of the order of the arrangement of the fixed-length slots of the file. The index information indicative of the order of the arrangement of the fixed-length slots is not limited to the slot number provided that it indicates the order of the arrangement of the fixed-length slots. The index file has a predetermined number of entries (management information areas) each including one or a plurality of slots. The entries are each identified by the number of the first fixed-length slot of the one or plurality of connected slots.

The entries of the property file FP each have slots as many as at least the slots assigned to the corresponding entries of the other files. For example, when the thumbnail picture file FTH and the text file FTX each have entries including two slots for one content file, the corresponding entry of the property file FP is assigned at least two slots.

Fig. 2 shows an example of the structure of the index file. The index file includes the text file FTX, the thumbnail picture file FTH, and the property file FP. The text file FTX, the thumbnail picture file FTH, and the property file FP of Fig. 2 each include entries each having four fixed-length slots.

The thumbnail picture file FTH has no header and has continuous fixed-length slots #1, #2, #3 and so on from the head. Likewise, the text file FTX has no header and has continuous fixed-length slots #1, #2, #3 and so on from the head. In contrast, the property file FP has a header at the head thereof, and following the header, it has continuous fixed-length slots #1, #2, #3 and so on. The header of the property file FP records not only the property file information but also thumbnail-picture-file information and text file information.

The thumbnail picture file FTH and the text file FTX may each have a header as with the property file FP. In that case, the thumbnail-picture-file information is located at the header of the thumbnail picture file FTH, while the text file information is located at the header of the text file FTX.

The text file FTX, the thumbnail picture file FTH, and the property file FP each have entries in which slots #1, #2, #3 and so on are arranged from the head. The entries of the text file FTX, the thumbnail picture file FTH, and the property file FP are each identified by the number of the first slot of the entry. The entries of the property file FP has slot numbers for identifying the corresponding entries of the thumbnail picture file FTH and the text file FTX to associate the entries of the property file FP with the entries of the thumbnail picture file FTH and the text file FTX (as shown by the arrow of Fig. 2). For example, in the example of Fig. 2, to the entry #5 of the property file FP, slot numbers indicative of the entries #5 of the thumbnail picture file FTH and the text file FTX are registered.

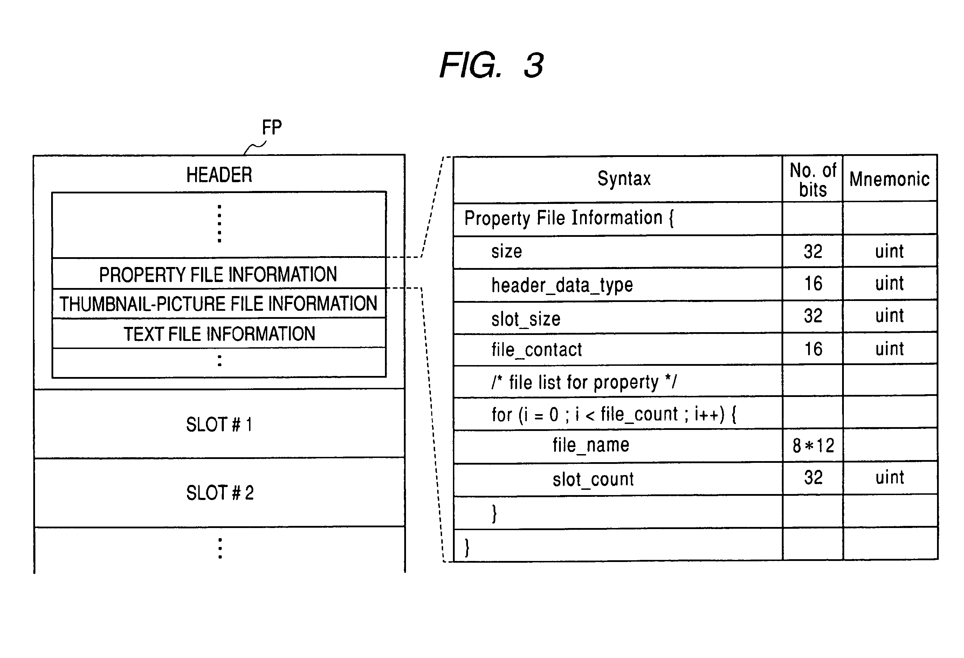

Fig. 3 shows the structure of the property file FP. The header of the property file FP is assigned information such as the size and type of the data block, and then assigned property file information, thumbnail-picture-file information, and text file information as management information indicative of the slot structure of the files.

As property file information, the size (size) of the data block of the property file information is assigned to the first 32 bits, and the type (header data type) indicative of that the data block is property file information is assigned to the next 16 bits. As property file information, the size of each slot (slot_size) of the property file is assigned to 32 bits following the previous 16 bits, and the number of files (file_count) of the property file FP is assigned to the following 16 bits. As property file information, the information of the files is assigned to the area following the 16 bits. The information of the files each includes a file name (file_name) and the number of slots (slot_count).

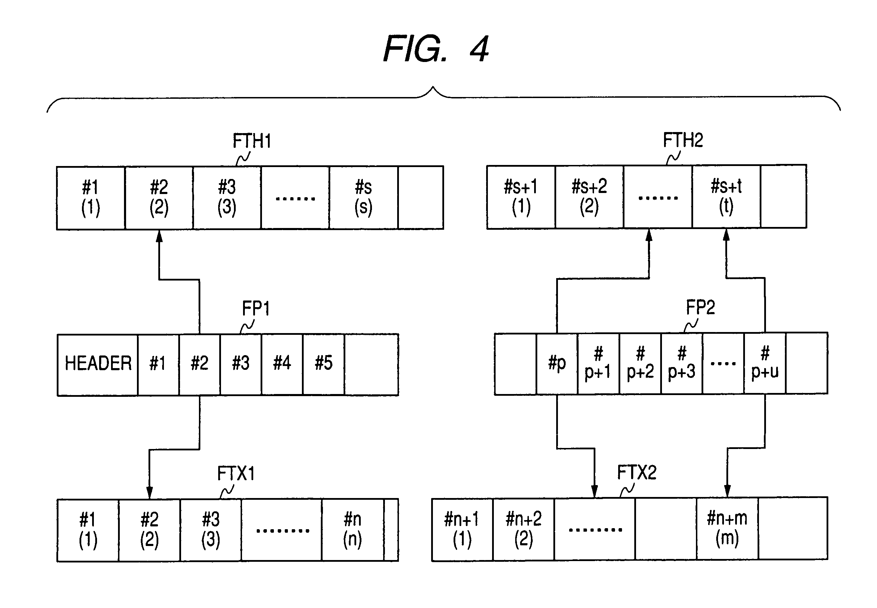

Fig. 4 shows an example of an index file including a plurality of property files, thumbnail picture files, and text files. The entries of the files in Fig. 4 each include one fixed-length slot. In this example, the property file includes first and second property files FP1 and FP2, the thumbnail picture file includes first and second thumbnail picture files FTH1 and FTH2, and the text file includes first and second text files FTX1 and FTX2.

For the thumbnail picture file, the first and second thumbnail picture files FTH1 and FTH2 each have continuous fixed-length slots from the head, as in the case of one file. The text file is also configured such that the first and second text files FTX1 and FTX2 each have continuous fixed-length slots from the head, as in the case of one file.

For the property file, the first property file FP1 at the head has a header and continuous fixed-length slots following the head, as in the case of one file (see Fig. 2). The following property file FP2 has no header and has continuous fixed-length slots from the head.

The slots of the first and second files are each managed by the slot number indicative of the number from the head of the first file. For example, when the number of the last slot of the first thumbnail picture file FTH1 is s, the slot number of the first slot of the second thumbnail picture file FTH2 is s+1 which is the following number. Thus, for the second thumbnail picture file FTH2, slot numbers that continue from the slot number s+1 are assigned to the slots thereof.

The numbers given to the slots in Fig. 4 indicate the slot numbers from the head of the first file of each file, which serve as slot numbers for managing the slots. The numerals in the parenthesis indicate slot numbers from the head of the first and second files, respectively. The number of files (file_count) at the header of the property file FP shown in Fig. 3 indicates the number of the files of the property file.

The property file FP has continuous fixed-length slots managed by slot numbers indicative of the slot number from the head thereof, as described above. The property file FP has a predetermined number of entries (management information areas) each including one or a plurality of fixed-length slots and identified by the slot number of the first fixed-length slot. In this case, if the user can find the slot number that identifies a desired entry (that is, the slot number assigned to the entry), the user can find the location of the desired entry with reference to the first slot in the property file FP on the basis of the slot number and the slot size (slot_size) (see Fig. 3) assigned to the property file information. Thus, the location of the desired entry with respect to the head of the property file FP can be found by taking the header size (size) (see Fig. 3) into consideration.

On the thumbnail-picture-file information and the text file information at the header of the property file FP of Fig. 3, the information of the thumbnail picture file and the information on the text file are recorded, respectively, as with the above-described property file information. Also for the thumbnail picture file FTH and the text file FTX, the locations of the corresponding slots can be detected from the slot numbers in a similar manner.

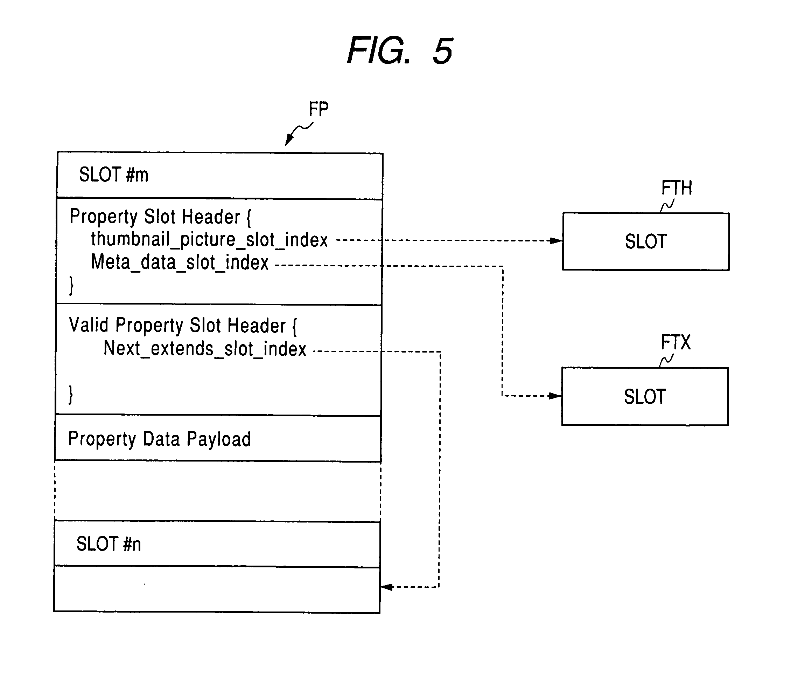

Fig. 5 shows the structure of the slots of the property file FP. The slots of the property file FP each have a header (Property Slot Header) at the head. The header includes index information (thumbnail_picture_slot_index) indicative of the corresponding slot of the thumbnail picture file FTH and index information (Meta_data_slot_index) indicative of the corresponding slot of the text file FTX as management information indicative of the slots of the other files of the same content file.

When a plurality of slots are assigned to one content file, the following header (Valid Property Slot Header) in the slots other than the last slot is provided with index information (Next_extends_slot_index) indicative of the following slot. The index file constitutes management information that defines the relationship with the other slot of the property file of the same content file.

For example, when attribute information on one content file is assigned to three continuous slots of the thumbnail picture file FTH, the three slots of the property file FP are each provided with index information (thumbnail_picture_slot_index) indicative of the corresponding slot of the corresponding thumbnail picture file FTH and index information (Meta_data_slot_index) indicative of the corresponding slot of the corresponding text file FTX. The first two slots of the three slots of the property file FP is provided with index information (Next_extends_slot_index) indicative of the following slot is set, thereby showing the relationship of the three slots.

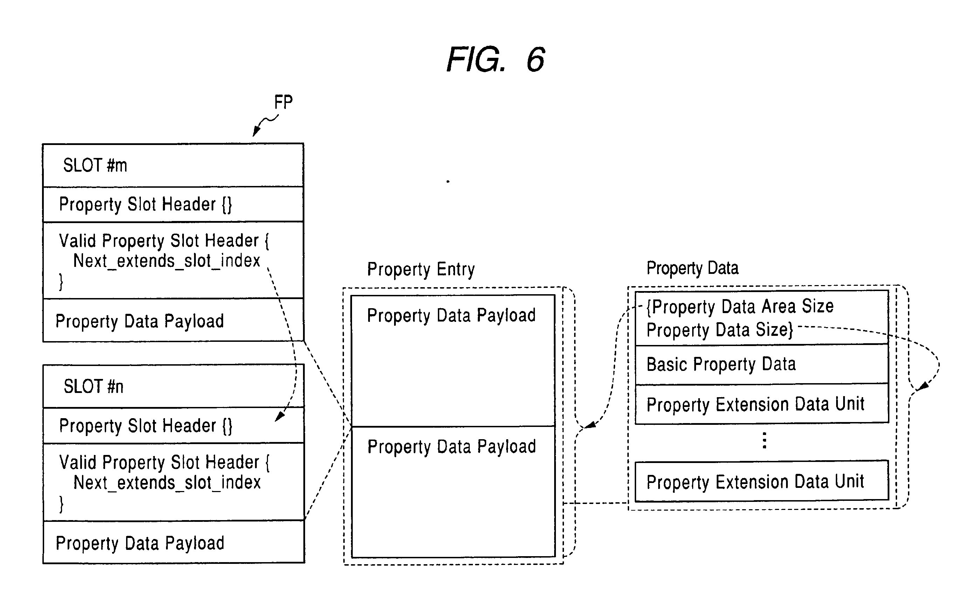

Fig. 6 shows the structure of the data section (Property Data Payload) of each slot of the property file FP. In each slot, an area following the above-described two headers is assigned to the data section (Property Data Payload) of the property entry. When a plurality of slots are assigned to one content file, property data (Property Data) according to the attribute information on the content file is sequentially assigned to the data section of each slot.

The property data (Property Data) includes the overall size (Property Data Area Size) of the data section (Property Data Payload) of the plurality of slots, the size of property data (Property Data Size) assigned to the data section (Property Data Payload) of the slots, and basic data (Basic Property Data) on the property entry including the plurality of slots, to which an extension data unit (Property Extension Data Unit) is added as the function of the property entry extends.

The overall size (Property Data Area Size) and the size of the property data (Property Data Size) are stored in the data section of the first slot of the property entry. Thus the free space of the property entry can be specified on the basis of the sizes. That is, the sizes constitute information that allows the free space of the property entry to be specified.

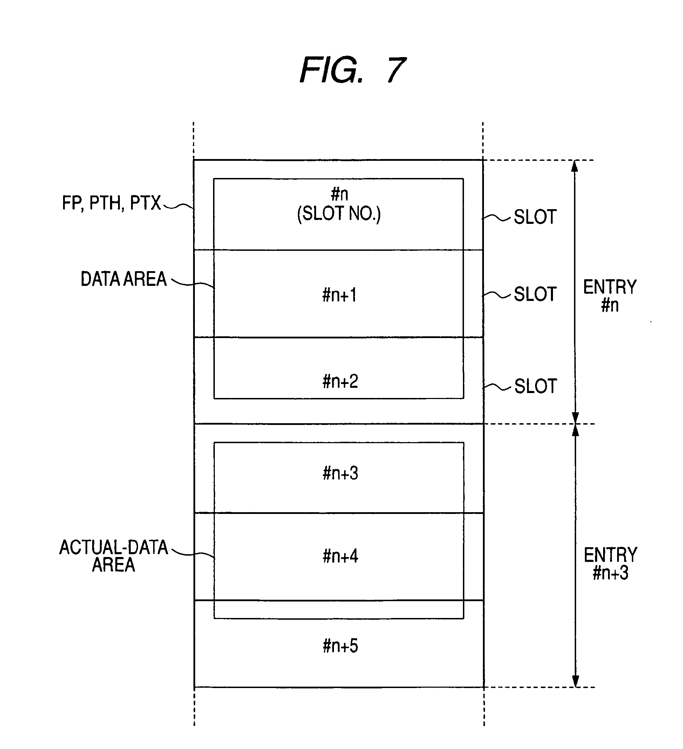

As described above, the files FTX, FTH, and FP each have one or a plurality of connected fixed-length slots. Each entry is identified by the slot number of the first fixed-length slot. Fig. 7 shows the relationship between the slots and the entries. The entry including connected slots of slot numbers #n to #n+2 is identified (managed) by the slot number #n. The entry including connected slots of slot numbers #n+3 to #n+5 is identified (managed) by the slot number #n+3.

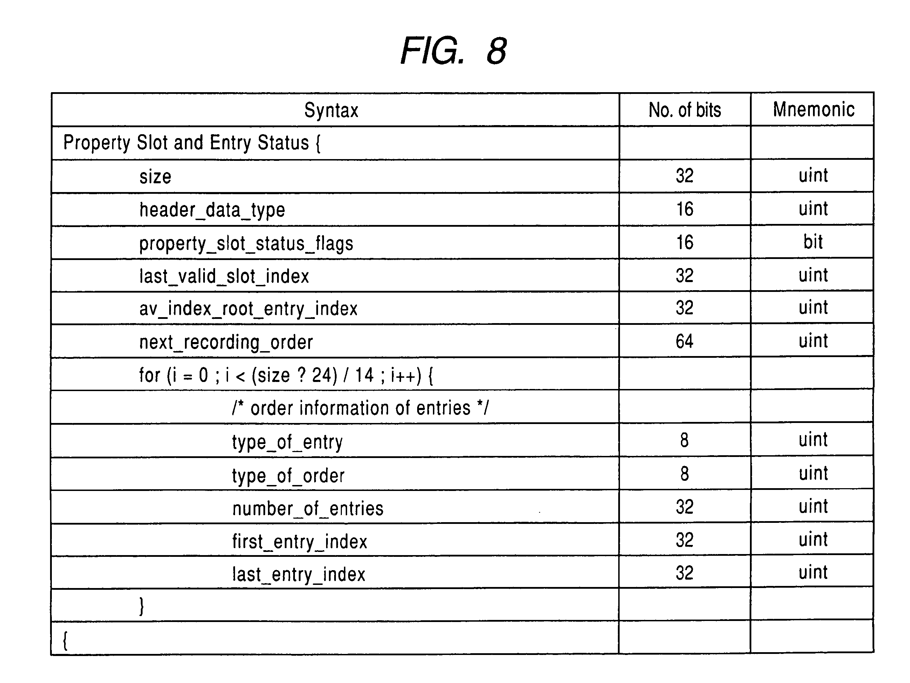

Fig. 8 shows the details of the header of the property file FP. For the header of the property file FP, the size (size) of the data block of the header is assigned to the first 32 bits, and the type (header_data_type) indicative of that the data block is a header is assigned to the following 16 bits. Then, the various flags (property_slot_status_flags) of the property file FP including the header are assigned to 16 bits following the 16 bits, and the slot number (last_valid_slot_index) of the valid last slot of the property file FP having the head is assigned to the following 32 bits.

The valid slot is a slot to which an entry is assigned. For the header of the property file FP, the slot number (av_index_root_entry_index) of the first slot of the entry that is assigned a root entry is assigned to 32 bits following the 32bits, and the slot number (next_recording_order) of the first slot of the following entry to be recorded is assigned to the following 64 bits.

For the header of the property file FP, management information on search order is sequentially set, following the 64 bits by the type of the entry to be searched for. The head of the management information is assigned information (type_of_entry) indicative of the type of the entry to be managed which is the object of search. Examples of the information (type_of_entry) include identifying information on an existent original folder, a virtual folder, and a content file, on which the type of the entry to be searched for is recorded.

The management information is next assigned the type of search order (type_of_order), in which the order of search such as the date of creation and the date of update is set. In this embodiment, the date of creation or the date of update is set to the recording and reproducing apparatus 1 at the start of the recording of the index file into the optical disc. The management information is next assigned the number of entries of the object of search (number_of_entries) and index information (first_entry_index) of the first entry and index information (last_entry_index) of the last entry when the entries to be searched for are arranged according to the type of search order (type_of_order).

Thus, for the property file FP, the type of search order such as the date of creation or the date of update is defined by the type of entry to be managed, and the first entry and the last entry are registered to the header of the property file FP by the type of search order.

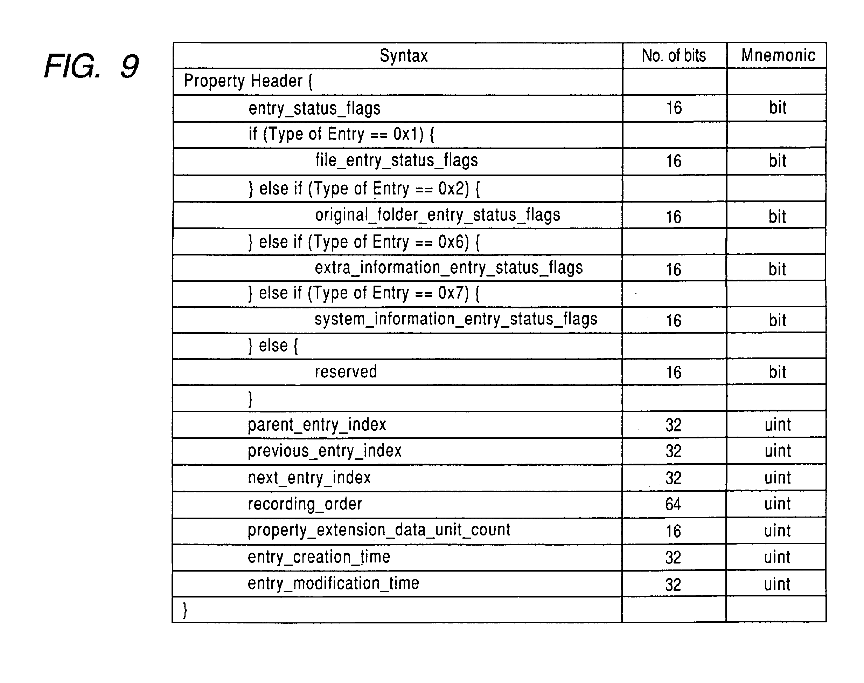

Fig. 9 shows the entry data of each entry. The entry data includes various types of data for the setting of the header.

The header of the entry data (Property Header) includes a flag (entry_status_flags) that specifies the object of the entry. When the flag (entry_status_flags) is set to 0x1, it indicates that the entry corresponds to the content file, and a flag (file_entry _status_flags) indicative of the attribute of the corresponding content file is provided. When the flag (entry_status_flags) is set to 0x2, it indicates that the entry corresponds to an existent folder, and then a flag (original_folder_entry _status_flags) indicative of the attribute of the folder is provided.

When the flag (entry_status_flags) is set to 0x6, it indicates that the entry describes extension information of a specific entry, and a flag (extra_information_entry_status) indicative of the extension information is provided. When the flag (entry_status_flags) is set to 0x7, it indicates that the entry describes system information, and a flag (system_information_entry_status_flags) indicative of the system information is provided.

After the various types of flag on the entries have been written, the header of the entry data is provided with a reserve.

The entry data includes basic data (Basic Property Data) on entries. For the basic data (Basic Property Data), index information (parent_entry_index) indicative of a higher-order entry according to the definition of the tree structure is assigned to the head by the first slot number of the higher-order entry. The basic data is then assigned index information (previous_entry_index) indicative of the previous entry of the arrangement of the search order by the first slot number of the previous entry, and is then assigned index information (next_entry_index) indicative of the next entry of the arrangement of the search order by the first slot number of the next entry.

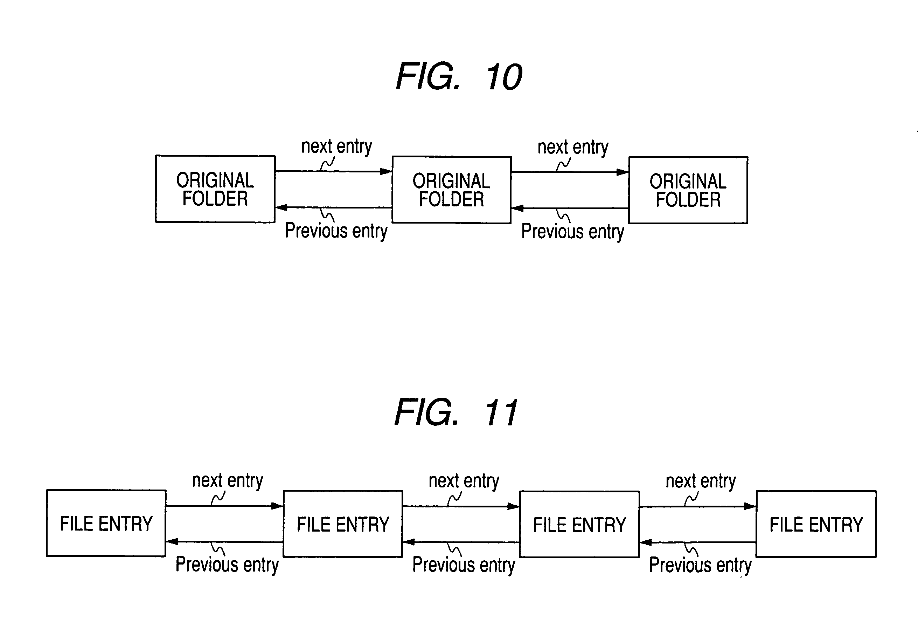

Thus, since the basic data is assigned the index information (previous_entry_index) and the index information (next_entry_index), a two-way link according to the search order is set to the entries, as shown in Figs. 10 and 11. Fig. 10 shows the link of original folders, and Fig. 11 shows the link of file entries.

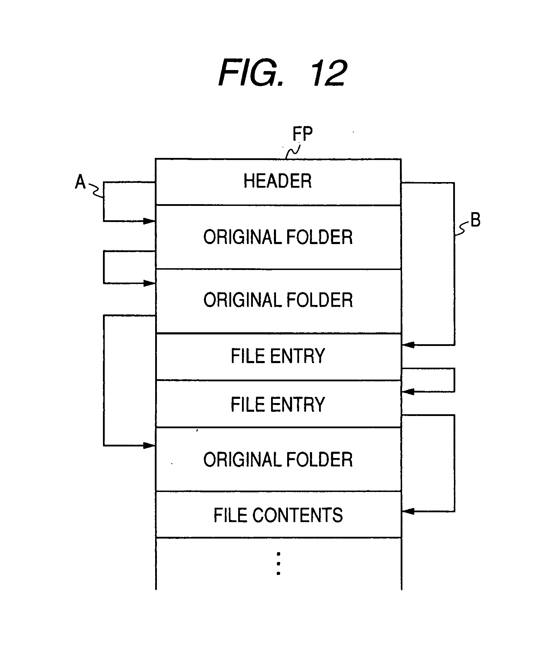

Fig. 12 shows an example the order of original folders and file entries. The system control microcomputer 3 selects management information on search order (information indicative of the type of an entry (type_of_entry) is set to the original folders)) from the record information of the header. The system control microcomputer 3 then detects index information (first_entry_index) of the first entry from the selected search-order management information to thereby detect the first entry of the original folder (see the arrow A of Fig. 12). The first entry is an entry located at the first of the order corresponding to the type of search order (type_of_order) set for the above-described management information.

The system control microcomputer 3 can detect the entry of the following original folder in this search from the index information (next_entry_index) set for the first entry. The system control microcomputer 3 can thus search the index information (next_entry_index) set for the entries of the following original folders to thereby search for the entries according to the date of creation or the date of update.

The system control microcomputer 3 can thus search index information from the index information (last_entry_index) of the last entry of the entries to be searched for to the index information (previous_entry_index) to thereby search for the entry of the original folder in reverse order of the date of creation or the date of update.

The system control microcomputer 3 selects management information on search order (information indicative of the type of entry (type_of_entry) is set for the content file) from record information of the header. The system control microcomputer 3 then detects index information (first_entry_index) of the first entry from the selected search-order management information to thereby detect the first entry of the content file (see the arrow B of Fig. 12).

The system control microcomputer 3 can detect the entry of the following content file in this search from the index information (next_entry_index) set for the first entry. The system control microcomputer 3 can thus search the index information (next_entry_index) set for the entries of the following content files to thereby search for the entries according to the date of creation or the date of update. The system control microcomputer 3 can also search the index information from the index information (last_entry_index) of the last entry to the index information (previous_entry_index) to thereby search for the entries of the content file in reverse order of the date of creation and the date of update.

In this case, the index information (last_entry_index), the index information (first_entry_index), the index information (next_entry_index), and the index information (previous_entry_index) are the respective first slot numbers of the entries. The locations of the entries in the index file can easily be detected from the first slot numbers, thus allowing desired entries to be searched for at high speed.

Referring back to Fig. 9, the entry data is then assigned the order of recoding (recording_order) as the basic data (Basic Property Data) on the entry, the number of the extension data units (Property_Extension_Data_Unit) (property_extension_data_unit_count), the date of creation of the entry (entry_creation_time), and the date of update of the entry (entry_modification_time) in this order.

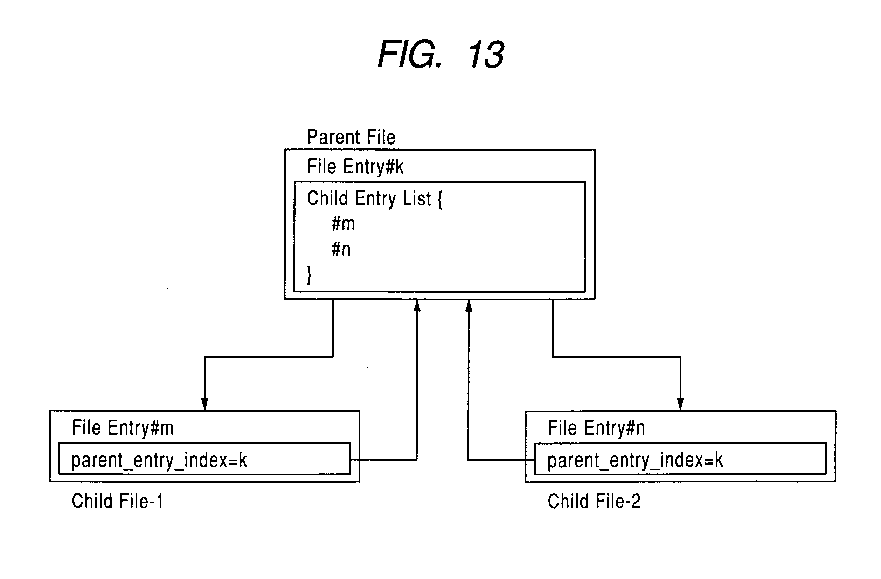

Fig. 13 is an explanatory diagram of the index information (parent_entry_index) indicative of a higher-order entry of the tree structure defined by the property entries. The index information (parent_entry_index) indicative of a higher-order entry is assigned the first slot number of the higher-order entry so as to indicate the entry of a higher-order existent higher-order folder or virtual folder.

Fig. 13 shows an example in which entries corresponding to child files are provided at a level lower than the entry corresponding to the parent file. In this case, the higher-order entry is a file entry #k, and the lower-order entry includes file entries #m and #n. For the lower-order file entries #m and #n, index information (parent_entry_index=k) indicative of the file entry #k is set, respectively. In contrast, for the higher-order file entry #k, index information (Child Entry List) indicative of lower-order file entries #m and #n is set, respectively. The index information (Child Entry List) includes the extension data unit (Property Extension Data Unit) (see Fig. 6).

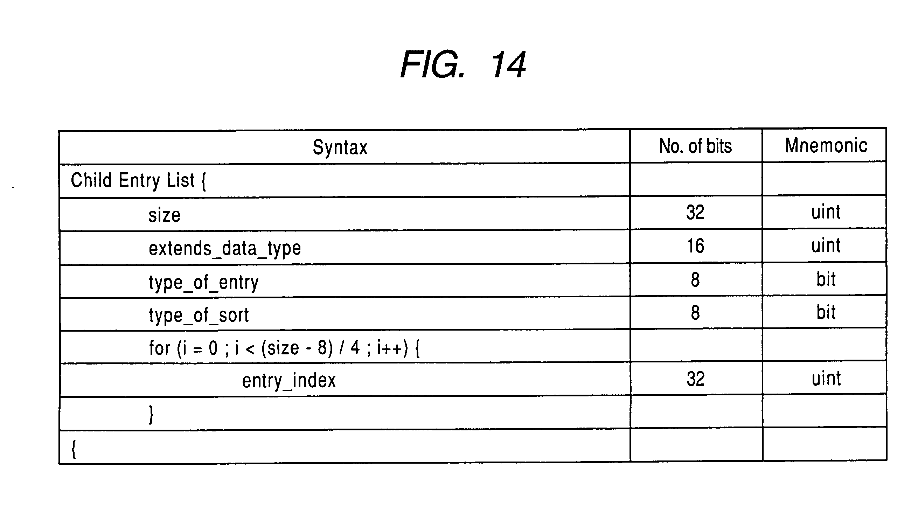

Fig. 14 shows the index information (Child Entry List) indicative of lower-order entries. The index information (Child Entry List) is assigned the size (size) to the first 32 bits, and then assigned the type of the data block (extends_data_type) of the index information (Child Entry List) to the following 16 bits. Then, the index information (Child Entry List) is assigned the type of entry (type of entry) to 8 bits. To the type of entry is assigned the type of the entry such as an existent folder, a virtual folder, or a file.

The index information (Child Entry List) is then assigned the type of sort (type_of_sort) according to the index information (Child Entry List) indicative of a lower-order entry, on which whether the tree structure defined by the index information (Child Entry List) is existent or virtual is recorded.

The index information (Child Entry List) is then assigned index information (entry_index) indicative of the lower-order entries by the number of the lower-order entries by the first slot numbers of the entries.

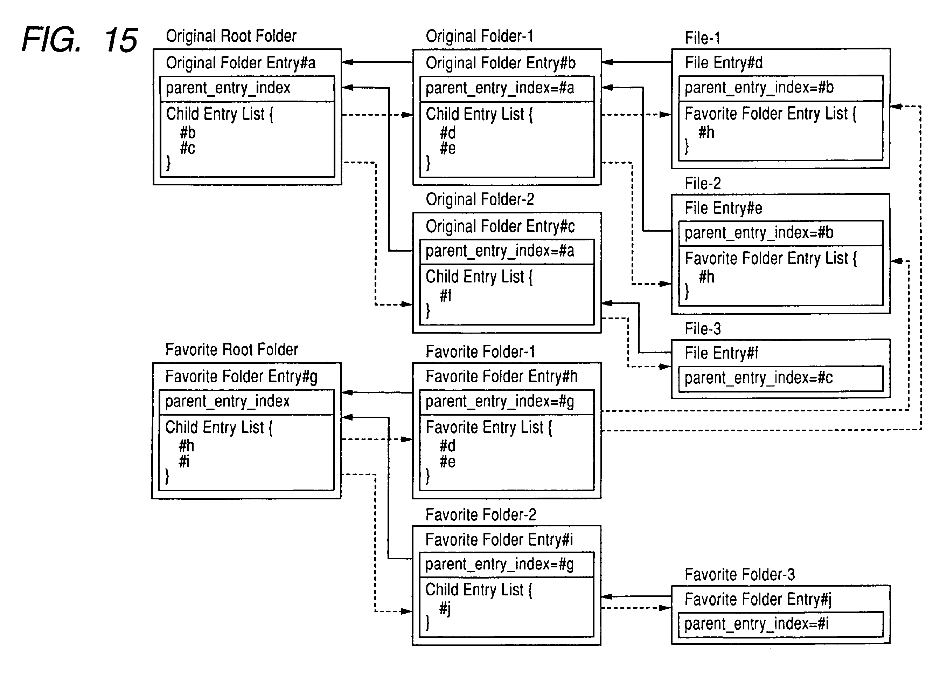

Thus, since the entries of the property file FP have the index information (parent_entry_index) and the index information (Child Entry List), two-way link information in tree structure is also provided. Accordingly, as shown in Fig. 15, the user can search the tree toward the higher order or the lower order only with the records of the entries according to the link information in tree structure. In this case, the index information (parent_entry_index) and the index information (Child Entry List) are the respective first slot numbers of the entries, from which the locations of the entries of the index file can easily be found, thus allowing various processings in the tree structure to be achieved at high speed.

The entries of the property file FP each have index information indicative the relationship among a plurality files. The index information indicative the relationship among a plurality files includes information (associating information) for associating a plurality of files that constitute one content. In this case, one of the plurality of files represents the content. An example of the representative file is a management information file that manages the other files.

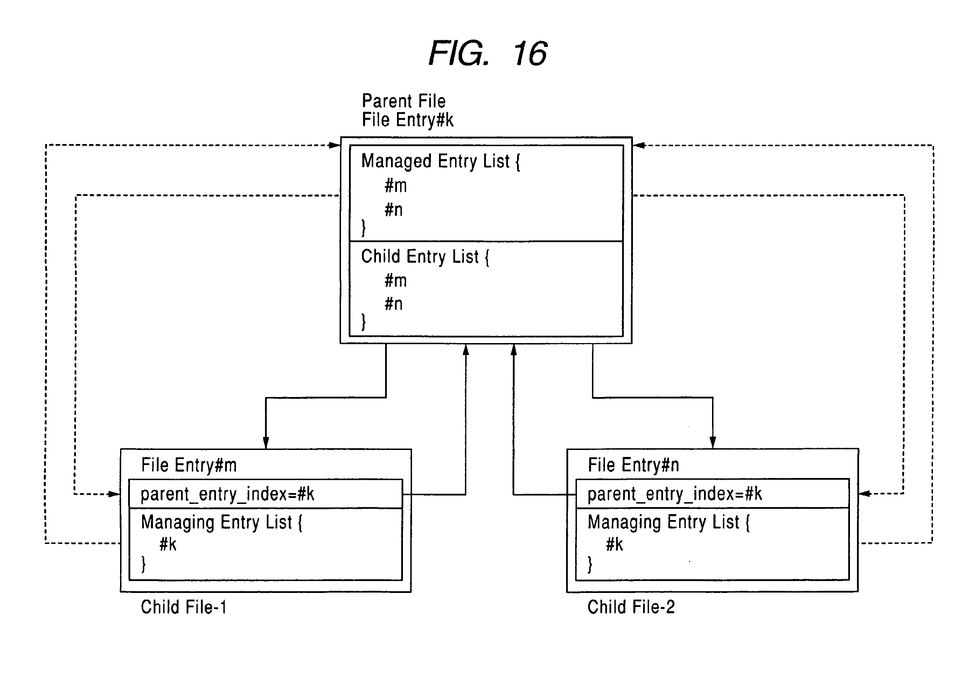

Fig. 16 shows an example in which each entry has associating information (information on management), showing the relationship among "Parent File", "Child File-1", and "Child File-2". In this case, when any of the "Parent File", "Child File-1", and "Child File-2" is deleted, the content cannot be reproduced even if the other files remain.

Therefore, as shown in Fig. 16, one representative file "Parent File" is assigned index information (Managed Entry List) indicative of the other files other than the one file, which is contained in the plurality of files including the representative file. As shown in Fig. 16, the other files "Child File-1" and "Child File-2" are assigned index information (Managing Entry List) indicative of the one file to show that the foregoing one file is a representation. Thus, index information (Managed Entry List) and index information (Managing Entry List) which are indicative of two-way managing relationship are set to the entries of a plurality of files in managing relationship. Moreover, such index information (Managed Entry List) and index information (Managing Entry List) are the first slot numbers of the entries of the other party in managing relationship, from which the locations of the entries in the index file can easily be detected, thus enhancing the speed of the processes of searching and displaying files.

With a plurality of files in reference relationship, information indicative of such reference relationship is set bidirectionally as index information indicative of the relationship among the files. In this case, entries of a referring file have reference information, and entries of a referred file have information to be referred. The index information indicative of the relationship among a plurality of files is registered in an extension data unit (Property Extension Data Unit).

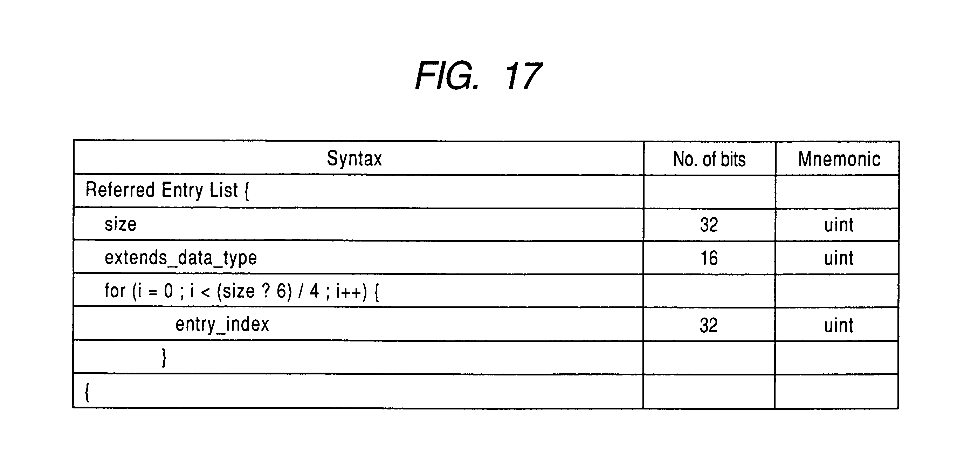

Fig. 17 shows referring information set for the entries of a referring file of the index information indicative of reference relationship. The head of the referring information is assigned the size (size) and the type (extends_data_type) of the data block. Next, the referring information is sequentially assigned first slot numbers (entry_index) of the entries of the files to which their own entries refer by a number corresponding to the referred files.

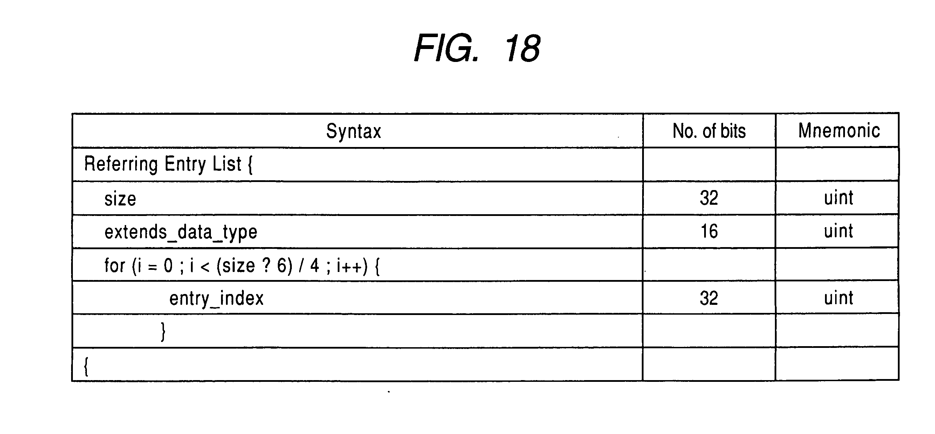

Fig. 18 shows referred information set for the entries of a file to be referred of the index information indicative of reference relationship. The head of the referred information is assigned the size (size) and the type (extends_data_type) of the data block. Then, the first slot numbers (entry_index) of the entries of the files that refer to their own entries are sequentially recorded on the referred information by a number corresponding to the referring files.

The above-mentioned managed information and managing information are set to the entries as is the index information indicative of reference relationship except that the type (extends_data_type) is different.

Thus, the first slot numbers (entry-index) of the entries indicative of reference relationship are set to the corresponding entries of a plurality of files in file reference relationship. This facilitate finding the location of the entries of the files in reference relationship in the index file from the first slot numbers, thus enhancing the speed of the process of deleting or changing files.

With this structure of the index file, the system control microcomputer 3 presents various content files recorded on an optical disc to the user on the basis of the index file by making effective use of the characteristics of the index file, and updates the index file in correspondence with the record of the content file.

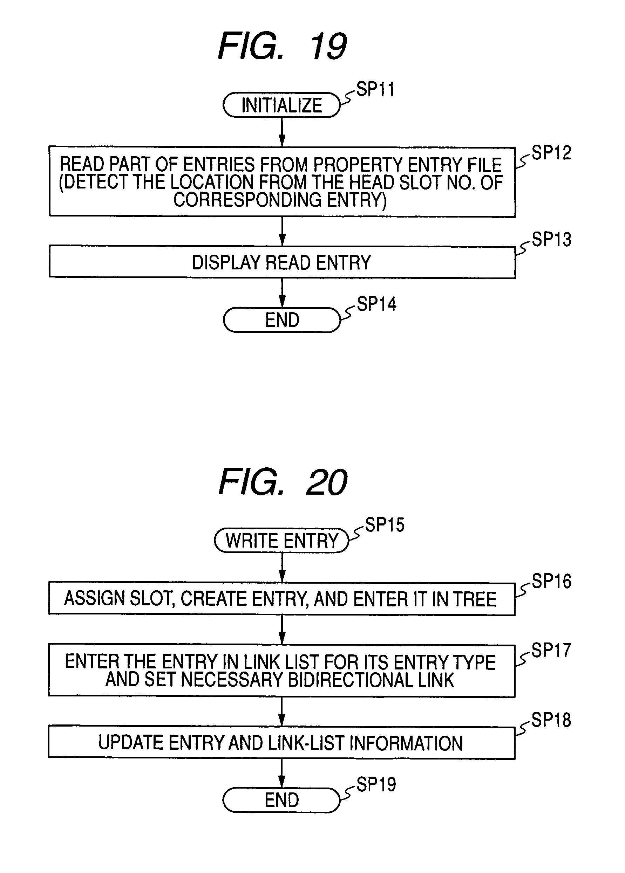

That is, when power is turned on with a recording medium loaded, the system control microcomputer 3 executes the procedure shown in Fig. 19 to execute the initialization.

When the process is started, the system control microcomputer 3 proceeds from step SP11 to step SP12. In step SP12, the system control microcomputer 3 reads a part including the header from the property file FP of the index file recorded on the optical disc. When no instruction is given from the user, the system control microcomputer 3 selects management information on the content file from the management information on the search order at the header of the property file FP, and detects the index information (last_entry_index) of the last entry set in the management information (see Fig. 8).

After reading the entry data according to the index information (last_entry_index) and storing it in a memory, the system control microcomputer 3 reads the entry data of the next entry from the index information (previous_entry_index) on the previous entry of the search order in reverse search order, the index information being set to the entry data, and stores it in the memory. Similarly, the system control microcomputer 3 reads the following previous entry data into the memory from the index information (previous_entry_index) on the previous entry set in the newly read entry data.

The system control microcomputer 3 repeats the reading of entry data according to the index information (previous_entry_index), and reversing the search order recorded in the index file, thereby acquiring entry data on the content file by an amount for use in display on the monitor 8.

When entry data is acquired, the system control microcomputer 3 proceeds to step SP 13, where it acquires corresponding entry data of the thumbnail picture file FTH or the text file FTX from the entry data, and displays the content file recorded on the recording medium in the form of a list of thumbnail pictures or titles, and proceeds to step SP14, where it terminates the procedure.

For example, when the type of search order (type_of_order) is set to chronological order of creation, the system control microcomputer 3 reproduces part of the index file within the range of display by the monitor 8 to sequentially display the content files recorded on the recording medium in list form in chronological order of creation.

When the type of search order (type_of_order) is set in chronological order of update, the system control microcomputer 3 reproduces part of the index file to sequentially display the content files recorded on the recording medium in list form from the newest updated file.

When the user gives an instruction to display the content files in chronological order, the system control microcomputer 3 detects index information (first_entry_index) of the first entry of a search subject from the header in place of the index information (last_entry_index) of the last entry (see Fig. 8). After reading the entry data according to the index information (first_entry_index) and storing it in a memory, the system control microcomputer 3 reads the entry data of the next entry from the index information (next_entry_index) on the following entry of the search order, the index information being set to the entry data, and stores it in the memory. Similarly, the system control microcomputer 3 detects the following entry data from the index information (next_entry_index) on the next entry set to the newly read entry data, and repeats the process to thereby reproduce part of the record of the index file in chronological order of recording or update, thus displaying the content files recorded on the recording medium in list form.

When the user gives an instruction to display an existent folder, the system control microcomputer 3 selects management information on the original folder from the search-order management information at the header of the property file FP, and executes similar process. When the user gives an instruction to display a virtual folder, the system control microcomputer 3 selects management information on the virtual folder from the search-order management information at the header of the property file FP, and executes similar process.

Thus, to read the entry data recorded on the property file FP, the system control microcomputer 3 finds the size (slot size) of the slots from the property file information at the header of the property file FP, and multiplies the slot size (slot_size) by the slot number according to the index information of the entry for reading to thereby detect the location of the entry data with reference to the first slot of the file.

Furthermore, the system control microcomputer 3 adds the size of the header to the data amount of the location to thereby detect the location of the property file FP from the head of the file. The system control microcomputer 3 acquires data on a fixed number of slots from the optical disc with reference to the location, and then acquires data by the number of slots assigned to the entry corresponding to the index information from the data. The system control microcomputer 3 stores the acquired data in the memory (built-in memory).

For the thumbnail picture data and text data for displaying the list, the system control microcomputer 3 multiplies the slot number according to the index information (Meta_data_slot_index) and (thumbnail_picture_slot_index) (see Fig. 5) of the corresponding thumbnail picture file FTH and text file FTX, which are set to the obtained property entries, by the size of the slots (slot_size) stored in the thumbnail-picture-file information and the text file information of the property file FP.

The system control microcomputer 3 detects the locations of the thumbnail picture file FTH and the text file FTX from the head, and acquires the corresponding entry data of the thumbnail picture file FTH and the text file FTX from the locations.

Thus, when there are two or more files, the system control microcomputer 3 determines in which file the first slot number for reading is present from the slot numbers of the files stored in the property file information, the thumbnail-picture-file information, and the text file information. When the file is other than the first file of the files, the system control microcomputer 3 subtracts the first slot number of the file from the first slot number for reading, and multiplies it by the slot size to detect the location of the entry in the corresponding file.

Thus, when there are two or more files, the system control microcomputer 3 detects a corresponding file from the files, and acquires entry data from the corresponding file.

In the process of displaying the list, the system control microcomputer 3 detects the location of the corresponding entry on the basis of the slot number of the entry from the head of the file to thereby acquire entry data. Also in the other following process, the system control microcomputer 3 detects the location of the corresponding entry on the basis of the slot number of the entry from the head of the file to thereby acquire entry data.

When the user gives an instruction to scroll the list, with the content file displayed in list form, as described above, the system control microcomputer 3 detects index information (previous_entry_index) or the index information (next_entry_index) at the first or last entry in the direction of scroll by the user, and detects the first slot number of the following entry in the direction of scroll by the user according to the detected index information (previous_entry_index) or the index information (next_entry_index). The system control microcomputer 3 then detects the location of the following entry in the direction of scroll from the first slot number, and acquires the data of the entry. The system control microcomputer 3 acquires entry data of the other corresponding file from the newly acquired entry data, and scrolls the list.

When the user gives an instruction for display in tree structure, the system control microcomputer 3 displays a root folder and lower-order folders of the root folder within the range of display by the monitor 8.

The property file FP has the entry of the root folder at the head thereof. The system control microcomputer 3 reads the data on the entry of the root folder from the first slot of the property file FP, and stores it in the memory. The system control microcomputer 3 acquires index information (Child_Entry_List) indicative of the lower-order entries of the existent folders from the entry data of the root folder stored in the memory, and detects the locations of the entries of the lower-order folders. The system control microcomputer 3 acquires entry data on the lower-order folders from the detected locations, and moreover, it detects the lower-order entries of the existent folders from the index information (Child_Entry_List) of the entry data.

The system control microcomputer 3 searches the index information (Child_Entry_List) indicative of lower-order entries from the entry of the root folder to detect the property entries of the levels that can be displayed by the monitor 8, and detects the corresponding thumbnail entries or text entries from the property entries. The system control microcomputer 3 displays the tree structure of the existent folders on the monitor 8 using the attribute information of the detected thumbnail entries or text entries.

When the user gives an instruction for display virtual folders in a tree structure, the system control microcomputer 3 sequentially searches the index information (Child_Entry_List) indicative of the lower-order entries of the virtual folders from the entries of the root folder, and executes the same process as for the existent folders to display the tree structure of the virtual folders on the monitor 8.

When the user selects any of the lower-order folders from the root folder, with the tree structure of a fixed level of existent folders or the tree structure of a fixed level of virtual folders displayed on the monitor 8, the system control microcomputer 3 searches the index information (Child_Entry_List) indicative of the lower-order entries on the content files set in the selected folder to detect the entries of the content files of the selected folder, and adds the content files to the display of the tree structure.

In this case, when the lowermost-order folder on the monitor 8 is selected by the user, the system control microcomputer 3 scrolls the whole display to the root folder, and deletes the display of the root folder, and detects the entries of the lower-order folder and displays them in the empty space.

When any of the folders is selected from the list of the existent folders and the virtual folders by the user, the system control microcomputer 3 detects the entries of the content files in the selected folder or the entries of the folder, as in the above-described display in tree structure, and displays the list of the attribute information of the detected content files or the folder on the monitor 8. When any folder is selected from the list by the user, the system control microcomputer 3 detects the entries of the content files in the selected folder or the folder, and displays them. That is, the system control microcomputer 3 searches the tree structure to the lower-order, thereby switching the display by the index file on the monitor 8.

When the user gives an instruction to shift to higher-order display, with the content files of one folder or folders displayed, the system control microcomputer 3 detects index information (parent_entry_index) indicative of the higher-order entries set to the property entries of the higher-order folders of the displayed content files or folders, and acquires entry data on the higher-order folders using the index information (parent_entry_index). The system control microcomputer 3 searches the index information (Child_Entry_List) indicative of the other lower-order entries on the basis of the entry data on the higher-order folders to acquire entry data, thereby acquiring the entry data of the other files or folders of the higher-order folders.

The system control microcomputer 3 acquires the corresponding entry data of the thumbnail entries and the text entries on the basis of the acquired entry data, and switches the display of the monitor 8. That is, the system control microcomputer 3 searches the tree structure toward the higher-order, thereby switching the display by the index file on the monitor 8.

The system control microcomputer 3 is two-way link information that defines the tree structure of index files. The system control microcomputer 3 makes a good use of the index information (parent_entry_index) and the index information (Child Entry List) to shift the tree structure to the higher order or lower order at high speed to which the display.

The system control microcomputer 3 receives the input of search conditions such as the date of picture shooting and the date of update by user's menu operation, and searches the property file FP for an entry according to the search conditions to detect a corresponding property entry. The system control microcomputer 3 displays a search result on the monitor 8 according to the entry data on the detected property entry.

For searching, the system control microcomputer 3 may execute the search in reverse chronological order of recording or update by sequentially searching the index information from the index information (last_entry_index) of the last entry to the index information (previous_entry_index). Alternatively, the system control microcomputer 3 may execute the search in chronological order of recording or update by sequentially searching the index information from the index information (first_entry_index) of the first entry to the index information (next_entry_index). The system control microcomputer 3 may also execute the search according to the date of creation of the entry data (entry_creation_time) or the date of update of the entries (entry_modification_time).

When the user gives an instruction to display related files in the searching process, the system control microcomputer 3 detects managed information and managing information on the entry data that hits the search conditions. Furthermore, the system control microcomputer 3 detects property entries indicated by the managed information and managing information, and displays a content file related to the content file that has hit the search conditions according to the entry data on the property entries. The system control microcomputer 3 thus simplifies the search operation by the user and the display operation for the related files.

When the user selects a content file from a list of content files and gives an instruction to display it, the system control microcomputer 3 instructs the sections to reproduce the corresponding file recorded on an optical disc and presents it to the user.

When the user selects a content file from a list of content files and gives an instruction to delete it, the system control microcomputer 3 searches for information indicative of the relationship among the property entries of the corresponding files. The system control microcomputer 3 then instructs the recording medium unit 14 to delete the corresponding content file according to the information indicative of the relationship only when it can be deleted.

In this case, the system control microcomputer 3 detects the property entry of the content file to be deleted, and detects referred information set to the property entry. When the entry of the content file to be deleted has information to be referred and when the content file is referred to by another content file, the system control microcomputer 3 notifies the user that it is difficult to delete the content file, and stops the deletion of the content file.

When no information to be referred is set to the entry of the content file to be deleted, the system control microcomputer 3 detects the presence or absence of managed information and managing information from the entry of the content file. When managed information or managing information is set to the entry, the system control microcomputer 3 detects information to be referred from the property entry also for the other files related to the content file on the basis of the managed information or the managing information, wherein when any of the other files is not referred to by the other content files, the system control microcomputer 3 determines that it can be deleted, and thus instructs the recording medium unit 14 to delete the information.

When deleting the content file to be deleted, the system control microcomputer 3 updates the index file in response to the deletion of the content file. In this case, the system control microcomputer 3 deletes the entry of the content file to be deleted from the property file FP, the thumbnail picture file FTH, and the text file FTX, and sets the slots to which the entry is assigned as free slots.

The system control microcomputer 3 detects a property entry indicated by index information (previous_entry_index) and (first_entry_index) on the search order recorded in the property entry of the content file to be deleted. The system control microcomputer 3 then updates the index information (previous_entry_index) and (next_entry_index) on the search order set to the detected property entry in such a manner as to skip the deleted property entry. When the content file to be deleted is at the head or the last of the search order, the system control microcomputer 3 updates the corresponding index information (first_entry_index) or (last_entry_index) at the header.

The system control microcomputer 3 detects the higher-order entries of the content file to be deleted according to the index information (parent_entry_index) indicative of the higher-order entries set to the property entry to be deleted. The system control microcomputer 3 then deletes the record of the entry to be deleted from the index information (Child_Entry_List) indicative of the lower-order entries recorded in the detected higher-order entries.

When managed information or managing information is set to the entry of the content file to be deleted, the system control microcomputer 3 deletes the other content file indicated by the managed information or the managing information from the recording medium unit 14. Thus, the system control microcomputer 3 deletes the entry of the other content file indicated by the managed information or the managing information from the index file in the same way.

When referring information is set to the entry of the content file to be deleted, the system control microcomputer 3 detects the entry of the content file referred to by the referring information, and deletes the record of the entry to be deleted from the information to be referred, which is set to the entry.

The system control microcomputer 3 simplifies the deleting process by making effective use of the index information (previous_entry_index), (next_entry_index), (parent_entry_index), (Child_Entry_List), (Managed Entry List), (Managing Entry List), and so on.

When the user selects a content file from the list of content files and gives an instruction to register it as a favorite, the system control microcomputer 3 sets two-way link information between the entry of the content file and the entry of a virtual folder for the favorite, as shown in Fig. 15.

When the user gives an instruction to record picture content files, the system control microcomputer 3 controls the operation of the imaging device 2 or the like to acquire the picture content files in sequence, and records the content files on an optical disc. In this case, the system control microcomputer 3 defines the folder according to the advance setting to control the operation of the recording medium unit 14, thereby recording the picture content files so as to allow the files to be managed in a tree structure based on, for example, the year or month of photo shooting.

After recording the content files, the system control microcomputer 3 updates the index file recorded on the optical disc in correspondence with the recording of the content files. In this case, the system control microcomputer 3 acquires various attribute information necessary for creating the index file during the recording of the content files, and after the content files have been recorded, the system control microcomputer 3 generates the entry data of the property file FP, the thumbnail picture file FTH, and the text file FTX that constitute the index file on the basis of the acquired attribute information.

That is, as shown in Fig. 20, the system control microcomputer 3 proceeds from step SP15 to step SP16 in correspondence with the recording of the content files. In step SP16, the system control microcomputer 3 assigns one or a plurality of slots as the slots of the entries of the recorded content files. In step SP 16, the system control microcomputer 3 locates the generated entry data to the assigned slots, thus registering the entries on the recorded content files to the tree.

At the reproduction or the like, the system control microcomputer 3 stores the relationship among the entries in list form on the basis of the index file read from the optical disc, and executes the above-described display process according to the record of the list. In step SP16, the system control microcomputer 3 registers the tree structure in a list in correspondence with the tree structure in which the entries of the recorded content files are registered.

In the next step SP17, the system control microcomputer 3 registers the entries the content files in the link list on the search order, shown in Fig. 10, and updates the two-way link information on the content files in the list.

In step ST18, the system control microcomputer 3 updates the record of the index file of the optical disc according to the description in the list, and then proceeds to step SP19, where it terminates the procedure.

By the process of Fig. 20, the system control microcomputer 3 records the entries on the content files to the text file FTX, the thumbnail picture file FTH, and the property file FP, updates the record on the other entries and headers recorded in the index file in correspondence with the record of the entries, and updates the index file recorded on the recording medium in correspondence with the record of the content files.

That is, the system control microcomputer 3 sets index information (thumbnail_picture_slot_index) and (Meta_data_slot_index) indicative of the relationship between the thumbnail picture file FTH and the text file FTX, and sets index information (Next_extends_slot_index) indicative of the following slot.

The system control microcomputer 3 records the entries on the content files on the files FTX, FTH, and FP, updates the record of the other entries and headers recorded on the index file in correspondence with the record of the entries, and updates the index file recorded on the recording medium in correspondence with the record of the content files.

That is, the system control microcomputer 3 sets index information (thumbnail_picture_slot_index) and (Meta_data_slot_index) indicative of the relationship between the thumbnail picture file FTH and the text file FTX, and sets index information (Next-extends-slot-index) indicative of the following slot.

The system control microcomputer 3 sets the link of the two-way link information as follows: the system control microcomputer 3 detects the management information on the search order of the content files from the search-order management information, and updates the index information (last_entry_index) of the last entry on the search order to the first slot number of the entry of the recorded content files. Then, the system control microcomputer 3 detects the property entry that has been set in the index information (last_entry_index) of the last entry, and updates the index information (next_entry_index) of the following entry on the search order of the entry data to the first entry number of the entry on the recorded content file.

As shown in Fig. 13, the system control microcomputer 3 sets the index information (parent_entry_index) indicative of the higher-order folder entry to the entry of the recorded content file, and correspondingly, the system control microcomputer 3 sets the index information (child Entry List) indicative of the entries of the recorded content file to the higher-order folder entry. The system control microcomputer 3 also updates the index file also for the number of entries of the property file FP.

When the system control microcomputer 3 has created an existent folder in the optical disc according to the record of the content files, the system control microcomputer 3 also updates the entries of the folder in the same way.

When the amount of data in a content file becomes lower than a limitation of the recording medium which can be managed by the recording-medium file management system during the recording of the content file, the system control microcomputer 3 starts to record the content file in another file to divide one content file on time base, and records the content file in a plurality of files. Also in this case, the system control microcomputer 3 sets index information (parent_entry_index) indicative of a higher-order entry in the first file, and sets the index information (child Entry List) indicative of lower-order entries to the files other than the first file, thereby recording the relationship among the files constituting one content file on the index file.

When any of the property file FP, the thumbnail picture file FTH, and the text file FTX has slots more than a predetermined number of slots at the registering of the entries of recorded content files to the index file, the system control microcomputer 3 registers the entries of the file having slots more than the predetermined number, and creates a plurality of files.

When the user selects any of content files and edits the content file, the system control microcomputer 3 reproduces the content file with an effect. For cut editing process of the effect process, the system control microcomputer 3 reproduces the content file according to cutting instruction by the user. For effecting accompanying transition such as fade-in, for example, video data output from the video decoder 17 is processed by a video-signal processing circuit (not shown).

The system control microcomputer 3 records the edited content file on an optical disc. In this case, the system control microcomputer 3 registers the entry of the edited content file to the index file to update the index file, as with the recording of a picture content file.

When recording the edited content file in an optical disc, the system control microcomputer 3 sets referring information and information to be referred to the property entry of the edited content file and the property entry of the original content file (in this case, the video file) that is referred to by the edited content file, as shown in Figs. 17 and 18, respectively, and sets reference information to both property entries.

When the editing process is deletion of unnecessary part and when the user gives an instruction not to store the original file, the system control microcomputer 3 may record the edited content file while deleting part of the content file recorded on the optical disc.

In this case, the system control microcomputer 3 updates the date of update of the entry of the content file. When the type of search of the index file is set to the date of update of (type_of_order), the system control microcomputer 3 updates the index information (previous_entry_index) and (first_entry_index), and furthermore updates the index information (previous_entry_index) and (next_entry_index) on the search order of the other property entry so that the entry becomes the last of the search order.

When a recording medium in which no index file is recorded is loaded and an instruction to record a picture content file is given, or when a recording medium in which only a content file is recorded and an instruction to create an index file is given, the system control microcomputer 3 displays a specified menu screen on the monitor 8, and receives the setting of the type of search-order managing information (type_of_order). As shown in Figs. 10 to 12, the system control microcomputer 3 switches the setting of the link on search order between the date of creation and the date of update to set the order of arrangement on the basis of the setting, thus creating an index file and records the index file in a recording medium.

In the recording and reproducing apparatus 1 shown in Fig. 1, the index file has continuous fixed-length slots each managed by a slot number (index information) indicative of the order of arrangement. The index file has a predetermined number of entries (management information areas) each including one or a plurality of continuous fixed-length slots and identified by the index information of the first fixed-length slot. To indicate other entries, for example, index information (previous_entry_index), (next_entry_index), (parent_entry_index), (Child_Entry_List), (Managed Entry List), and (Managing Entry List), which are slot numbers for identifying the other entries, are registered to specified entries.

Accordingly, with the recording and reproducing apparatus 1, when entry data is reproduced from a desired entry of the index file, the location of the desired entry with respect to the head of the slot row can be detected from the slot number and the size of the slots without reading the index file into a memory and grasping the correspondence between the entries and their locations unlike the conventional apparatus. Thus, with the recording and reproducing apparatus 1, desired entry data can be acquired by reproducing part of the index file without reading the whole index file; correspondingly, the time necessary for processing the index file can be decreased, so that the time necessary for start-up can be reduced. As a result, the recording and reproducing apparatus 1 can reduce the time required for displaying a list of the content files recorded on an optical disc and decrease the load of processing the index file.

The recording and reproducing apparatus 1 shown in Fig. 1 can reproduce part of the entry data of the thumbnail picture file FTH and the text file FTX on a specified content file detected by searching the property file FP according to the index information (thumbnail_picture_slot_index) or (Meta_data_slot_index). Accordingly, with the recording and reproducing apparatus 1, the time necessary for processing the index file can be reduced for reproduction of the entry data of the thumbnail picture file FTH or the text file FTX of a specified content file, so that the time required for searching and displaying can be reduced.

In the recording and reproducing apparatus 1 of Fig. 1, the type of search order (type_of_order) is recorded on the header of the index file by the type of entry (type_of_entry) of a content file to be registered, an existent folder, and a virtual folder, and the distinction between the date of creation and the date of update of the content file and the folder is recorded on the (type_of_order). Moreover, with the recording and reproducing apparatus 1 of Fig. 1, the index information (first_entry_index) of the first entry according to the order of arrangement is recorded on the header, and the entry specified by the index information (first_entry_index) and index information (next_entry_index) on the next entry according to the order of arrangement are recorded in sequence. The index information (first_entry_index) and (next_entry_index) are also registered to the index file according to the number of slots (slot number) to the first slot of the entry.

Accordingly, with the recording and reproducing apparatus 1, the entry of a desired content file can be found by a quick and simple process, for example, by setting a content file as a search object, searching for the entry of the content file in recording order, and partially and sequentially reproducing a location specified by the index information (first_entry_index) or (next_entry_index) from the index file. The recording and reproducing apparatus 1 also allows the user to find a desired folder easily and quickly by switching the type (type_of_order) to a folder and executing the similar process.

With the recording and reproducing apparatus 1 of Fig. 1, in the setting for searching in order of recording or update, the index information (last entry index) on the last entry is recorded on the header of the index file, and index information (previous_entry_index) or (next_entry_index) indicative of the previous or next entry, respectively, are sequentially recorded on the entries of this order.

Accordingly, with recording and reproducing apparatus 1, the user can search the index information (next_entry_index) and (previous_entry_index) recorded by type in the index file for the entries of the content file and the entries of an existent folder and a virtual folder in the order of recording or update, or reversely search for them, and display the search results. The searching process can also be executed easily and quickly. With the recording and reproducing apparatus 1, the user can execute the searching process easily and quickly also by variously switching the order of searching.

With the recording and reproducing apparatus 1 shown in Fig. 1, index information indicative of the higher-order entries of the tree structure of the content file recorded in a recording medium and the virtual tree structure and the corresponding lower-order entries are set thereto, respectively, so as to specify the entries according to the index information by the first slot. Accordingly, with the recording and reproducing apparatus 1, the tree structure can be shifted easily and quickly according to the two-way index information; correspondingly, this enhances the speed of the process of searching and displaying the various content files or folders with such tree structure.

In the recording and reproducing apparatus 1 shown in Fig. 1, the relationship among related multiple files can be defined by the index information (Managed Entry List), (Managing Entry List), and so on indicative of the mutual relationship among the entries of the files. Thus, the recording and reproducing apparatus 1 allows the process for multiple files to be executed easily and quickly. More specifically, with the recording and reproducing apparatus 1, when one of multiple files represents the files, the other files are also displayed according to the index information set to the entries of the files by selecting any of the files; when an instruction to delete any of the files is given, the whole files are deleted. In this case, for files in reference relationship, it is determined whether they can be deleted after checking the presence of the reference relationship using the index information.

The recording and reproducing apparatus 1 of Fig. 1, the setting of various index information on the index file is executed or updated by recording or deleting the content file. The index information is set so as to specify the entry by the slot number from the head of the file, and moreover, it is set bilaterally. This facilitates the process for changing the various settings of the index file at high speed.

With the recording and reproducing apparatus 1 of Fig. 1, when the data of the files of the index file exceeds a predetermined amount because of the record of the content files, the entries of the files are registered in two files. In this case, even when a large number of content files are recorded in an optical disc so that they cannot be managed by the file management system of the optical disc, the large number of content files can be registered, and presented to the user quickly and easily because the entries are specified by the slot number from the first file.

Even when the data of the content files themselves increases so that they cannot be managed by the file management system of the optical disc, the recording and reproducing apparatus 1 of Fig. 1 can be applied to the recording of picture content files, thus facilitating high-speed management of the index file in the case of continuously recording video data or audio data for a long time, because the content files are recorded into a plurality of files and index information indicative of the reference relationship is set to the index file.

The foregoing embodiments are for the case of creating an index file including the property file FP, the thumbnail picture file FTH, and the text file FTX. The invention is not limited to that; the invention can be broadly applied to the case of creating an index file by adding files on audio data to the files FP, FTH, and FTX.

### Industrial Applicability

The invention can reduce the time necessary for start-up at power-on or at the loading of recording medium, and is applicable to camcorders, digital still cameras and so on.

## Claims

1. A recording apparatus for recording one or more content files and an index file for managing the content files on a recording medium, the recording apparatus comprising:
a content-file changing section for changing the content files recorded on the recording medium; and
an index-file updating section for updating the index file recorded on the recording medium; wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the index-file updating section registers the index information indicative of the other management information areas to the predetermined management information areas.

2. The recording apparatus according to Claim 1, wherein
the index file includes a plurality of files to which different attribute information is assigned;
the predetermined management information areas are provided to one file constituting the plurality of files; and
the index information registered to the predetermined management information areas is index information that identifies the management information areas of the other files corresponding to the predetermined management information areas.

3. The recording apparatus according to Claim 1, wherein
the predetermined management information areas are for managing a specific type of folder or file; and
the index information registered to the predetermined management information areas identifies the management information areas to be searched before or after the predetermined management information areas.

4. The recording apparatus according to Claim 1, wherein
the predetermined management information areas are for managing predetermined nodes that constitute a tree structure including folders and files; and
the index information registered to the predetermined management information areas is for identifying the management information areas for managing a node at a level higher or lower than the node.

5. The recording apparatus according to Claim 1, wherein
the predetermined management information areas are for managing predetermined folders or files; and
the index information registered to the predetermined management information areas is index information identifying the management information areas for managing folders or files related to the predetermined folders or files.

6. The recording apparatus according to Claim 1, wherein
the predetermined management information areas are for managing folders including a predetermined file; and
the index information registered to the predetermined management information areas is for identifying the management information areas for managing the predetermined file.

7. A method for recording one or more content files and an index file for managing the content files on a recording medium, the method comprising:
a content-file changing step for changing the content files recorded on the recording medium; and
an index-file updating step for updating the index file recorded on the recording medium; wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the index-file updating step includes registering the index information indicative of the other management information areas to the predetermined management information areas.

8. A program for a computer to execute a method for recording one or more content files and an index file for managing the content files on a recording medium, the method comprising:
a content-file changing step for changing the content files recorded on the recording medium; and
an index-file updating step for updating the index file recorded on the recording medium; wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the index-file updating step includes registering the index information indicative of the other management information areas to the predetermined management information areas.

9. A computer-readable recording medium that records a program for a computer to execute a method for recording one or more content files and an index file for managing the content files on a recording medium, the method comprising:
a content-file changing step for changing the content files recorded on the recording medium; and
an index-file updating step for updating the index file recorded on the recording medium; wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the index-file updating step includes registering the index information indicative of the other management information areas to the predetermined management information areas.

10. A reproducing apparatus for reproducing a specified content file from a recording medium that records one or more content files and an index file for managing the content files, the reproducing apparatus comprising:
an index-file reproducing section for reproducing the index file from the recording medium; and
a content-file reproducing section for reproducing the specified content file from the recording medium on the basis of the index file reproduced by the index-file reproducing section, wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the predetermined management information areas of the index file store the index information for identifying the other management information areas; and
the index-file reproducing section detects the location of the other management information area on the index file from the index information registered in the predetermined management information area and the size information on the fixed-length slots, and reproduces the data on the detected location from the index file recorded on the recording medium.

11. The reproducing apparatus according to Claim 10, wherein
the index file includes a plurality of files to which different attribute information is assigned;
the predetermined management information areas are provided to one file constituting the plurality of files; and
the index information registered to the predetermined management information areas is for identifying the management information areas of the other files corresponding to the predetermined management information areas.

12. The reproducing apparatus according to Claim 10, wherein
the predetermined management information areas are for managing a specific type of folder or file; and
the index information registered to the predetermined management information areas is for identifying the management information areas to be searched before or after the predetermined management information areas.

13. The reproducing apparatus according to Claim 10, wherein
the predetermined management information areas are for managing predetermined nodes that constitute a tree structure including folders and files; and
the index information registered to the predetermined management information areas is for identifying the management information area for managing a node at a level higher or lower than the nodes.

14. The reproducing apparatus according to Claim 10, wherein
the predetermined management information areas are for managing predetermined folders or files; and
the index information registered to the predetermined management information areas is for identifying the management information areas for managing folders or files related to the predetermined folders or files.

15. The reproducing apparatus according to Claim 10, wherein
the predetermined management information areas are for managing folders including a predetermined file; and
the index information registered to the predetermined management information areas is for identifying the management information areas for managing the predetermined folders.

16. A method for reproducing a specified content file from a recording medium that records one or more content files and an index file for managing the content files, the method comprising:
an index-file reproducing step for reproducing the index file from the recording medium; and
a content-file reproducing step for reproducing the specified content file from the recording medium on the basis of the index file reproduced by the index-file reproducing section, wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the predetermined management information areas of the index file store the index information for identifying the other management information areas; and
the index-file reproducing step includes detecting the location of the other management information area on the index file from the index information registered in the predetermined management information area and the size information on the fixed-length slots, and reproducing the data on the detected location from the index file recorded on the recording medium.

17. A program for a computer to execute a method for reproducing a specified content file from a recording medium that records one or more content files and an index file for managing the content files on a recording medium, the method comprising:
an index-file reproducing step for reproducing the index file from the recording medium; and
a content-file reproducing step for reproducing the specified content file from the recording medium on the basis of the index file reproduced by the index-file reproducing section, wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the predetermined management information areas of the index file store the index information for identifying the other management information areas; and
the index-file reproducing step includes detecting the location of the other management information area on the index file from the index information registered in the predetermined management information area and the size information on the fixed-length slots, and reproducing the data on the detected location from the index file recorded on the recording medium.

18. A computer-readable recording medium that records a program for a computer to execute a method for reproducing a specified content file from a recording medium that records one or more content files and an index file for managing the content file on a recording medium, the method comprising:
an index-file reproducing step for reproducing the index file from the recording medium; and
a content-file reproducing step for reproducing the specified content file from the recording medium on the basis of the index file reproduced by the index-file reproducing section, wherein
the index file includes continuous fixed-length slots, the fixed-length slots being managed by index information indicative of the order of the arrangement of the fixed-length slots;
the index file has a predetermined number of management information areas having one or a plurality of the fixed-length slots, the management information areas being identified by the index information of the first fixed-length slot; and
the predetermined management information areas of the index file store the index information for identifying the other management information areas; and
the index-file reproducing step includes detecting the location of the other management information area on the index file from the index information registered in the predetermined management information area and the size information on the fixed-length slots, and reproducing the data on the detected location from the index file recorded on the recording medium.
